(19) Europäisches Patentamt
European Patent Office
Office européen des brevets

(11) EP 4 019 558 A1

(12) EUROPEAN PATENT APPLICATION
published in accordance with Art. 153(4) EPC

(43) Date of publication:
**29.06.2022 Bulletin 2022/26**

(21) Application number: **20856778.4**

(22) Date of filing: **25.08.2020**

(51) International Patent Classification (IPC):
***C08F 20/18*** *(2006.01)* ***C08F 20/38*** *(2006.01)*
***B41J 2/01*** *(2006.01)* ***C09D 11/38*** *(2014.01)*

(52) Cooperative Patent Classification (CPC):
**B41J 2/01; C08F 20/18; C08F 20/38; C09D 11/38**

(86) International application number:
**PCT/JP2020/032003**

(87) International publication number:
**WO 2021/039783 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2019 US 201962892630 P**
**28.11.2019 JP 2019215816**

(71) Applicants:
- **TOKYO OHKA KOGYO CO., LTD.**
  **Kawasaki-shi, Kanagawa 211 0012 (JP)**
- **Pixelligent Technologies, LLC**
  **Baltimore, MD 21224 (US)**

(72) Inventors:
- **CHISAKA Hiroki**
  **Kawasaki-shi, Kanagawa 211-0012 (JP)**
- **SUZUKI Wataru**
  **Kawasaki-shi, Kanagawa 211-0012 (JP)**
- **MISUMI Koichi**
  **Kawasaki-shi, Kanagawa 211-0012 (JP)**
- **GUSCHL Peter Christopher**
  **Baltimore, Maryland 21224 (US)**
- **SWISHER Robert**
  **Baltimore, Maryland 21224 (US)**

(74) Representative: **Plasseraud IP**
**66, rue de la Chaussée d'Antin**
**75440 Paris Cedex 09 (FR)**

# (54) CURABLE INK COMPOSITION, CURED MATERIAL AND NANOCOMPOSITE

(57) The objective of the invention is to provide a curable ink composition capable of forming a cured product with a high refractive index and applicable to the inkjet method, a cured product of the curable ink composition, and a nanocomposite having a film composed of the cured product of the curable ink composition. In this invention, in a curable ink composition including a photopolymerizable compound (A) and metal compound nanocrystals (B), using a sulfide compound (A1) having specific structure and a (meth)acrylate compound (A2) as the photopolymerizable compound (A), and using zirconium oxide nanocrystals as the metal compound nanocrystals (B), and accomplished the present invention.

## Description

TECHNICAL FIELD

The present invention relates to a curable ink composition, a cured product of the curable ink composition, and a nanocomposite having a film composed of the cured product of the curable ink composition.

This application claims priority to US Provisional Application No. 62/892,630, filed on 28 August 2019, the content of which is incorporated herein by reference.

BACKGROUND ART

A highly refractive material has been used to form an optical component. For example, a composition in which metal oxide particles such as titanium dioxide and zirconium oxide are dispersed in an organic component is used as highly refractive material. As such a highly refractive material, a composition including metal oxide particles, a fluorene compound with a specific structure having a hydrolyzable silyl group, and an organic solvent is disclosed (see Patent Document 1). Due to the inclusion of fluorene compounds with the specific structure described above, the composition described in Patent 1 have excellent dispersibility of metal oxide particles and can give cured product with an even higher refractive index by increasing the ratio of metal oxide particles.

Patent Document 1: Japanese Unexamined Patent Application, Publication No. 2012-233142

DISCLOSURE OF THE INVENTION

Problems to be Solved by the Invention

A composition described in Patent Document 1 is used, for example, to form high refractive index film in display panels in display application such as OLED display device. However, the formation of high refractive index films using the composition described in Patent Document 1 has a problem that it requires expensive or time-consuming processes such as vacuum chamber drying.

The problem of this process can be eliminated by increasing the ratio of organic materials with low viscosity and high refractive index in the composition used to form the high refractive index film. However, as the high refractive index organic materials in compositions such as those described in Patent Document 1 are solids, the refractive index and viscosity usually tend to increase simultaneously. Therefore, it is often difficult to find organic materials with low viscosity and a high refractive index, making it difficult to apply processes without vacuum drying, especially inkjet methods.

In view of the above, there is a need for liquid curable ink compositions that can form cured products with a high refractive index and that do not require a vacuum drying process step, e.g. where the inkjet method can be applied.

The present invention has been made in view of the above problems, and an object thereof is to provide a curable ink composition capable of forming a cured product with a high refractive index and applicable to the inkjet method, a cured product of the curable ink composition, and a nanocomposite having a film composed of the cured product of the curable ink composition.

Means for Solving the Problems

The present inventors have found that the above-mentioned problems can be solved by, in a curable ink composition including a photopolymerizable compound (A) and metal compound nanocrystals (B), using a sulfide compound (A1) having specific structure and a (meth)acrylate compound (A2) as the photopolymerizable compound (A), and using zirconium oxide nanocrystals as the metal compound nanocrystals (B), and accomplished the present invention. More specifically, the invention provides the following.

A first aspect of the present invention relates to a curable ink composition including a photopolymerizable compound (A), metal compound nanocrystals (B), and including or not including a solvent (S),

wherein the photopolymerizable compound (A) includes a sulfide compound (A1) represented by following formula (a-1) and a (meth)acrylate compound represented by following formula (a-2),
the metal compound nanocrystals (B) include zirconium oxide nanocrystals, and
a viscosity measured at 25 °C using an E-type viscometer is 30 cP or less.

[Chem. 1]

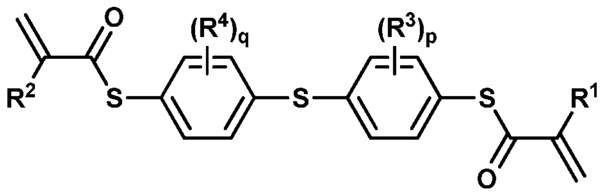

(a-1)

In the formula (a-1), $R^1$ and $R^2$ are each independently a hydrogen atom or a methyl group, $R^3$ and $R^4$ are each independently an alkyl group having 1 or more and 5 or less carbon atoms, and p and q are each independently 0 or 1.

[Chem. 2]

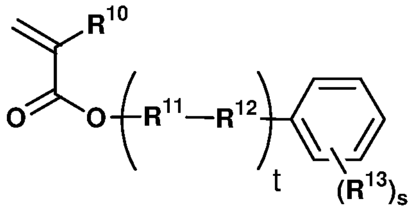

(a-2)

In the formula (a-2), $R^{10}$ is a hydrogen atom of a methyl group, $R^{11}$ is an alkylene group having 1 or more and 3 or less carbon atoms, $R^{12}$ is a single bond, an oxygen atom or a sulfur atom, $R^{13}$ is an alkyl group having 1 or more and 4 or less carbon atoms, an alkoxy group having 1 or more and 4 or less carbon atoms, a phenoxy group, or a phenyl group, s is an integer of 0 or more and 5 or less, and t is 0, 1, or 2.

A second aspect of the present invention relates to a cured product of the curable ink composition of the first aspect.

A third aspect of the present invention relates to a nanocomposite including a substrate and a film composed of the cured product of the second aspect on the substrate.

Effects of the Invention

The present invention can provide a curable ink composition capable of forming a cured product with a high refractive index and applicable to the inkjet method, a cured product of the curable ink composition, and a nanocomposite having a film composed of the cured product of the curable ink composition.

BRIEF DESCRIPTION OF THE DRAWINGS

Figure 1 shows exemplary viscosity at 25 °C versus capped zirconia weight percent in BA as described in Reference Example 2.
Figure 2 shows exemplary the refractive index at 550 nm for cured film as a function of volume percent of capped zirconia in BA as described in Reference Example 2.
Figure 3 shows exemplary viscosity versus temperature behavior of formulations with different weight percent of capped zirconia in monomer blends with and without surfactant as described in Reference Examples 2 and 3.
Figure 4 has pictures of varying degrees of nozzle plate wetting on Fujifilm Dimatix DMC cartridge nozzle plate: severe (top), moderate (middle) and little to no (bottom).
Figure 5 is the TGA curve that results from heating the formulation Nanocomposite D3 described in Reference Example 3B.
Figure 6 is the Optical Density (OD) of Nanocomposite D3 as a formulation described in Reference Example 3B.
Figure 7 displays refractive index versus wavelength curve for a cured film of Nanocomposite D3 described in Reference Example 3B.
Figure 8 displays %T versus wavelength curve for a 10-micron cured film of Nanocomposite D3 described in Reference Example 3B.
Figure 9 shows viscosity at 25 °C versus added PGMEA weight percent to Nanocomposites F1 and F2, described

in Reference Example 5A, at different viscosities to illustrate the dilution effect.

DETAILED DESCRIPTION OF THE INVENTION

<<Curable ink composition>>

A curable ink composition includes a photopolymerizable compound (A) and metal compound nanocrystals (B). The curable ink composition may or may not contain a solvent (S). The photopolymerizable compound (A) includes a sulfide compound (A1) represented by the formula (a-1) described later and a (meth)acrylate compound represented by the formula (a-2) described later. The metal compound nanocrystals (B) include zirconium oxide nanocrystals.

It should be noted that, in the present claims and the specification, "(meth)acrylate" means both acrylate and methacrylate. In the present claims and the specification, "(meth)acrylic" means both acrylic and methacrylic. In the present claims and the specification, "(meth)acryloyl" means both acryloyl and methacryloyl.

Since the curable ink composition includes the sulfide compound (A1) represented by the formula (a-1) and the (meth)acrylate compound (A2) represented by the formula (a-2) in combination, and includes the metal compound nanocrystals (B) of predetermined type, a cured product with high refractive index can be formed by using the curable ink composition, and the viscosity of the curable ink composition is low enough to allow the curable composition to be applied to an inkjet method.

The curable ink composition may or may not contain a solvent (S). A content of the solvent (S) in the curable ink composition is preferably 5% by mass or less, and may be 3% by mass or less, 2% by mass or less, 1% by mass or less, 0.5% by mass or less, or 0.3% by mass or less, and the less is the more. It is most preferable that the curable ink composition include substantially no solvent (s). Substantially free of solvent (S) in the curable ink composition means that no solvent (S) is intentionally added to the curable ink composition, other than a very small amount of solvent (S) unavoidably brought into the curable ink composition with the raw materials. When the curable ink composition includes substantially no solvent (S), the content of the solvent (S) in the curable ink composition is, for example, 0.2% by mass or less, preferably 0.15% by mass or less, more preferably 0.1% by mass or less, and further preferably 0.05% by mass or less.

The viscosity of the curable ink composition is preferably 30 cP or low, more preferably 28 cP or low, and further preferably 25 cP or low as a viscosity measured at 25 °C with an E type viscometer. The viscosity of the curable ink composition can be adjusted by, for example, adjusting a content of the photopolymerizable compound (A) or metal compound nanocrystals (B), or adding a small amount of the solvent (S) to the curable ink composition.

Hereinafter, essential or optional components that can be included in the curable ink composition are described.

<Photopolymerizable compound (A)>

The curable ink composition includes a photopolymerizable compound (A). The photopolymerizable compound (A) includes a sulfide compound (A1) represented by the formula (a-1) described below and a (meth)acrylate compound (A2) represented by the formula (a-2) described below.

[Sulfide compound (A1)]

The sulfide compound (A1) is a compound represented by the following formula (a-1).

[Chem. 3]

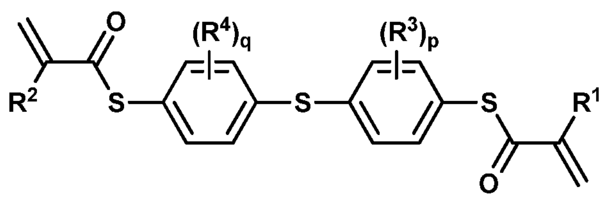

(a-1)

In the formula (a-1), $R^1$ and $R^2$ are each independently a hydrogen atom or a methyl group. $R^3$ and $R^4$ are each independently an alkyl group having 1 or more and 5 or less carbon atoms. p and q are each independently 0 or 1.

$R^1$ and $R^2$ are each independently a hydrogen atom or a methyl group. $R^1$ and $R^2$ are may be the same or different. $R^1$ and $R^2$ are preferably the same in view of ease of synthesis and availability of the sulfide compound (A1).

$R^3$ and $R^4$ are each independently an alkyl group having 1 or more and 5 or less carbon atoms. $R^3$ and $R^4$ are

may be the same or different. $R^3$ and $R^4$ are preferably the same in view of ease of synthesis and availability of the sulfide compound (A1) .

The alkyl group having 1 or more and 5 or less carbon atoms as $R^3$ and $R^4$ can be liner or branched. Examples of the alkyl group having 1 or more and 5 or less carbon atoms as $R^3$ and $R^4$ include a methyl group, an ethyl group, an n-propyl group, an isopropyl group, an n-butyl group, an isobutyl group, a sec-butyl group, a tert-butyl group, an n-pentyl group, an isopentyl group, and tert-pentyl group.

Suitable examples of the sulfide compound (A1) include following compounds.

[Chem. 4]

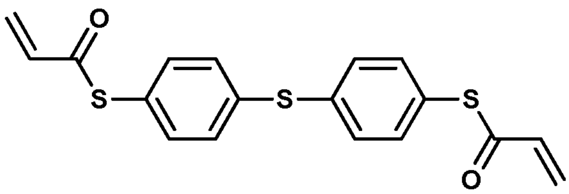
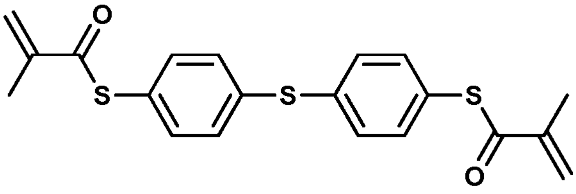
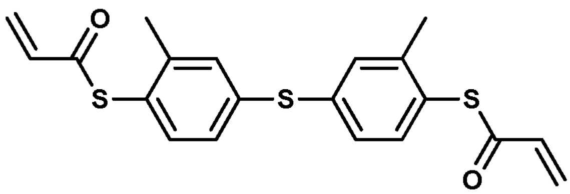
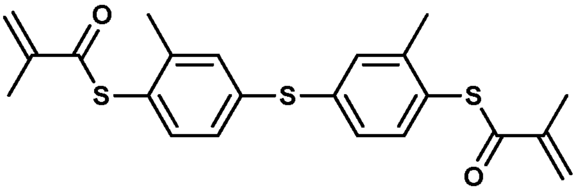

[(Meth)acrylate compound (A2)]

The (meth)acrylate compound (A2) is a compound represented by the following formula (a-2).

[Chem. 5]

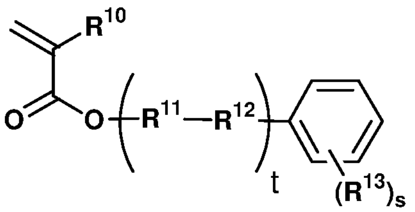

(a-2)

In the formula (a-2), $R^{10}$ is a hydrogen atom or a methyl group. $R^{11}$ is an alkylene group having 1 or more ad 3 or less carbon atoms. $R^{12}$ is a single bond, an oxygen atom, or a sulfur atom. $R^{13}$ is an alkyl group having 1 or more and 4 or less carbon atoms, an alkoxy group having 1 or more and 4 or less carbon atoms, a phenoxy group, or a phenyl group. s is an integer of 0 or more and 5 or less. t is 0, 1, or 2.

In the formula (a-2), when t is 2, the plurality of $R^{11}$ may be the same or different, and preferably the same. When t is 2, the plurality of $R^{12}$ may be the same or different, and preferably the same.

$R^{11}$ is an alkylene group having 1 or more ad 3 or less carbon atoms. Specific examples of the alkylene group include a methylene group, an ethane-1,2-diyl group (an ethylene group), an ethane-1,1-diyl group, a propane-1,3-diyl group, a propane-1,2-diyl group, and a propane-2,2-diyl group. Among these, the methylene group, the ethane-1,2-diyl group (the ethylene group), and the propane-1,2-diyl group are preferable, and the ethane-1,2-diyl group (the ethylene group) is more preferable.

$R^{12}$ is a single bond, an oxygen atom, or a sulfur atom, and the single bond is preferable. When $R^{12}$ is the single bond, t is preferably 1.

$R^{13}$ is an alkyl group having 1 or more and 4 or less carbon atoms, an alkoxy group having 1 or more and 4 or less carbon atoms, a phenoxy group, or a phenyl group, and preferably the alkyl group or the alkoxy group having 1 or more and 4 or less carbon atoms in view of low viscosity. Specific examples of the alkyl group include a methyl group, an ethyl group, an n-propyl group, an isopropyl group, an n-butyl group, an isobutyl group, a sec-butyl group, and tert-butyl group. Among these, the methyl group and the ethyl group are preferable, and the methyl group is more preferable.

Specific examples of the alkoxy group include a methoxy group, an ethoxy group, an n-propyloxy group, an isopropyloxy group, an n-butyloxy group, an isobutyloxy group, a sec -butyloxy group, and a tert-butyloxy group. Among these, the methoxy group and the ethoxy group is preferable, and the methoxy group is more preferable.

s is an integer of 0 or more and 5 or less, preferably 0 or 1, and more preferably 0.

Suitable examples of the (meth)acrylate compound (A2) include following compounds.

[Chem. 6]

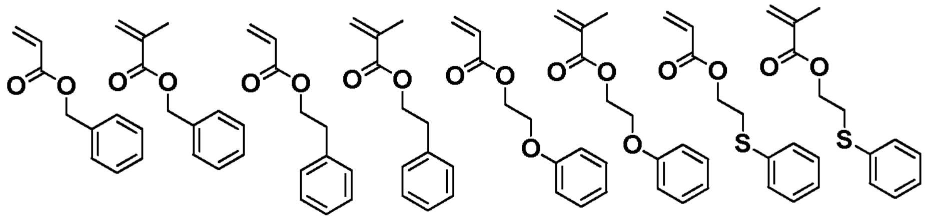

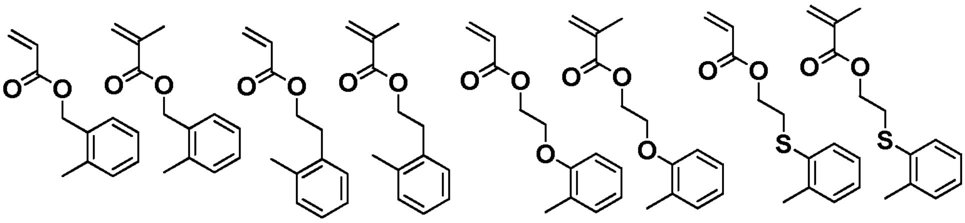

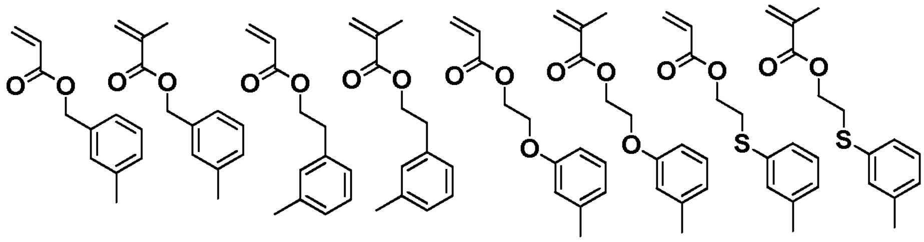

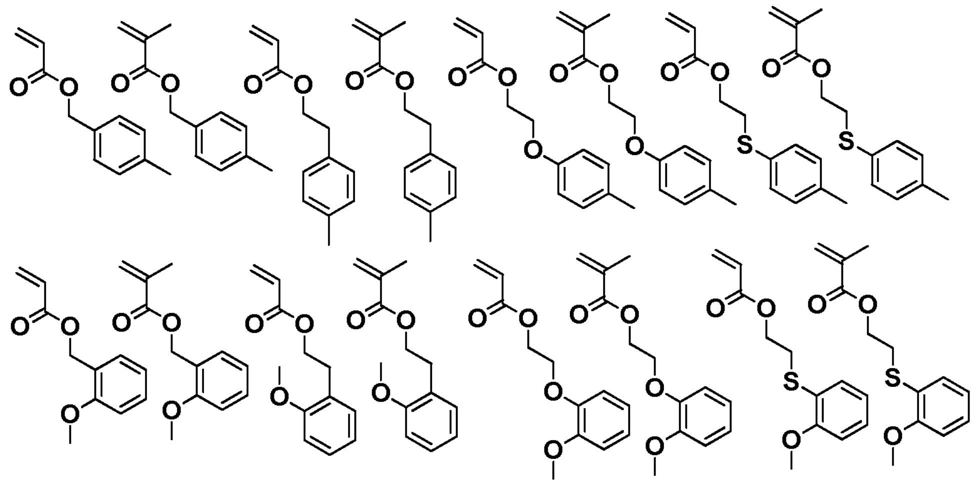

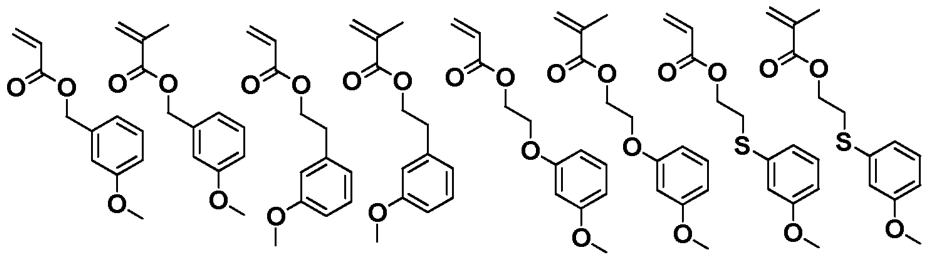

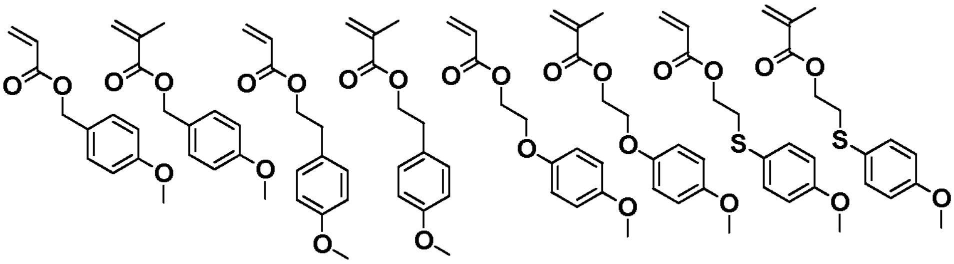

<Other photopolymerizable compound (A3)>

The photopolymerizable compound (A) may include other photopolymerizable compound (A3) other than the sulfide compound (A1) and the (meth)acrylate compound (A2) as long as the objective of the present invention is not impaired. Other photopolymerizable compound (A3) is not particularly limited, and conventionally known monofunctional photopolymerizable compound and polyfunctional photopolymerizable compound can be used.

Examples of the monofunctional photopolymerizable compound include (meth)acrylamide, methylol (meth)acrylamide, methoxymethyl(meth)acrylamide, ethoxymethyl(meth)acrylamide, propoxymethyl(meth)acrylamide, butoxymethoxymethyl(meth)acrylamide, N-methylol (meth)acrylamide, N-hydroxymethyl(meth)acrylamide, (meth)acrylic acid, fumaric acid, maleic acid, maleic anhydride, itaconic acid, itaconic anhydride, citraconic acid, citraconic anhydride, crotonic acid, 2-acrylamide-2-methylpropanesulfonic acid, tert-butylacrylamide sulfonic acid, methyl (meth)acrylate, ethyl (meth)acrylate, butyl (meth)acrylate, 2-ethylhexyl (meth)acrylate, cyclohexyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-(meth)acryloyloxy-2-hydroxypropyl phthalate, glycerol mono(meth)acrylate, tetrahydrofurfuryl (meth)acrylate, dimethylamino (meth)acrylate, glycidyl (meth)acrylate, 2,2,2-trifluoroethyl (meth)acrylate, 2,2,3,3-tetrafluoropropyl (meth)acrylate, and half (meth)acrylates of phthalic acid derivatives. These monofunctional p photopolymerizable compounds may be used individually, or two or more thereof may be used in combination.

Examples of the polyfunctional photopolymerizable compound include polyfunctional monomers such as ethylene glycol di(meth)acrylate, diethylene glycol di(meth)acrylate, tetraethylene glycol di(meth)acrylate, propylene glycol di(meth)acrylate, polypropylene glycol di(meth)acrylate, butylene glycol di(meth)acrylate, neopentyl glycol di(meth)acrylate, 1,6-hexane glycol di(meth)acrylate, trimethylolpropane tri(meth)acrylate, glycerol di(meth)acrylate, pentaerythritol triacrylate, pentaerythritol tetraacrylate, dipentaerythritol pentaacrylate, dipentaerythritol hexaacrylate, pentaerythritol di(meth)acrylate, pentaerythritol tri(meth)acrylate, pentaerythritol tetra(meth)acrylate, dipentaerythritol penta(meth)acrylate, dipentaerythritol hexa(meth)acrylate, 2,2-bis(4-(meth)acryloxydiethoxyphenyl)propane, 2,2-bis(4-(meth)acryloxypolyethoxyphenyl)propane, 2-hydroxy-3-(meth)acryloyloxypropyl (meth)acrylate, ethylene glycol diglycidyl ether di(meth)acrylate, diethylene glycol diglycidyl ether di(meth)acrylate, phthalic acid diglycidyl ester di(meth)acrylate, glycerol triacrylate, glycerol polyglycidyl ether poly(meth)acrylate, urethane (meth)acrylate (in other words, a tolylene diisocyanate), reaction product of, trimethylhexamethylene diisocyanate, hexamethylene diisocyanate, and 2-hydroxyethyl (meth)acrylate, methylenebis(meth)acrylamide, (meth)acrylamide methylene ether, condensates of a polyhydric alcohol and N-methylol (meth)acrylamide, triacrylformal, and the like. These polyfunctional p photopolymerizable compounds may be used individually, or two or more thereof may be used in combination.

The ratio of the sum of the mass of the sulfide compound (A1) and the mass of the (meth)acrylate compound (A2) relative to the mass of the photopolymerizable compound (A) is preferably 80% by mass or more, more preferably 90% by mass or more, further preferably 95% by mass or more, and most preferably 100% by mass. The ratio of the mass of the sulfide compound (A1) relative to the mass of the curable ink composition excluding the mass of the solvent (S) is preferably 5% by mass or more and 30% by mass or less, more preferably 7% by mass ore more and 25% by mass or less, and further preferably 9% by mass or more and 20% by mass or less. The ratio of the mass of the (meth)acrylate compound (A2) relative to the mass of the curable ink composition excluding the mass of the solvent (S) is preferably 10% by mass or more and 50% by mass or less, more preferably 20% by mass ore more and 45% by mass or less, and further preferably 30% by mass or more and 40% by mass or less. When the photopolymerizable compound (A) includes the sulfide compound (A1) and the (meth)acrylate compound (A2) in an amount within the above range, the curable ink composition is highly photocurable and has low viscosity, and the cured product with a high refractive index can be formed by using the curable ink composition.

It is preferable that the mass of the sulfide compound (A1) is more than the mass of the (meth)acrylate compound (A2), because the cured product with high refractive index can be easily formed by using the curable ink composition.

[Metal compound nanocrystals (B)]

The curable ink composition includes metal compound nanocrystals (B). The metal compound nanocrystals (B) include zirconium oxide nanocrystals. The curable ink composition may include zirconium oxide nanocrystals alone as the metal compound nanocrystals (B), or zirconium oxide nanocrystals in combination with other metal compound nanocrystals. A ratio of a mass of the zirconium oxide nanocrystals relative to a mass of the metal compound nanocrystals (B) is preferably 70% by mass or more, more preferably 80% by mass or more, further preferably 90% by mass or more, and particularly preferably 100% by mass. A cured product that exhibits a high refractive index can be formed by including the metal compound nanocrystals (B) described above in the curable ink composition. The zirconium oxide nanocrystals are not particularly limited as long as the cured product with desired high refractive index can be formed. The zirconium oxide nanocrystals may or may not be surface treated. The zirconium oxide nanocrystals are preferably surface treated in view of dispersibility or dispersion stability in the curable ink composition, and ease of forming the cured product with

high refractive index. As the surface treated zirconium oxide nanocrystals, at least partially capped zirconium oxide nanocrystals with a capping agent bound at least partially at their surface are preferred. The bond of the capping agent may be a chemical bond such as a covalent bond, or physical bond, such as a bond by intermolecular forces or electrical interactions. Particle diameter of the zirconium oxide nanocrystals, capping treatment method for the zirconium oxide nanocrystals, capping agent used for capping treatment and the like are is described in more detail in other embodiments described later.

An average particle diameter of the metal compound nanocrystals is preferably 500nm or less, and more preferably 2nm or more and 100nm or less from the view point of transparency of the cured product.

A content of the metal compound nanocrystals (B) in the curable ink composition is not particularly limited as long as the objective of the present invention is not impaired. The content of the metal compound nanocrystals (B) in the curable ink composition is preferably 5% by mass or more and 70% by mass or less, more preferably 35% by mass or more and 70% by mass or less, and more preferably 45% by mass or more and 60% by mass or less relative to the mass of the curable ink composition excluding the mass of solvent (S). When the content of the metal compound nanocrystals (B) in the curable ink composition is within the above-described range, it is easy to form a cured product with high refractive index while keeping the viscosity of the curable ink composition within the desired range.

<Polymerization initiator (C)>

The curable ink composition may include a polymerization initiator (C). The curable ink composition preferably includes the polymerization initiator (C). The polymerization initiator (C) is not particularly limited as long as it is a compound that can cure the curable ink composition well. Typically, a photopolymerizataion initiator (C1) and a thermalpolymerization initiator (C2) can be each used individually or a combination of both can be used. The photopolymerization initiator (C1) is not particularly limited, and may be a conventionally known photopolymerization initiator. As the thermalpolymerization initiator (C2), conventionally known thermalpolymerization initiators such as 2,2'-azobis(isobutyronitrile) (AIBN) can be used. Hereinafter, photopolymerization initiator (C1) is described.

Specific examples of the photopolymerization initiator (C1) include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, 1-(4-isopropylphenyl)-2-hydroxy-2-methylpropan-1-one, 1-(4-dodecylphenyl)-2-hydroxy-2-methylpropan-1-one, 2,2-dimethoxy-1,2-diphenylethan-1-one, bis(4-dimethylaminophenyl) ketone, 2-methyl-1-[4-(methylthio)phenyl]-2-morpholinopropan-1-one, 2-benzyl-2-dimethylamino-1-(4-morpholinophenyl)-butan-1-one, O-acetyl-1-[6-(2-methylbenzoyl)-9-ethyl-9H-carbazol-3-yl]ethanone oxime, O-acetyl-1-[6-(pyrrole-2-ylcarbonyl)-9-ethyl-9H-carbazol-3-yl]ethanone oxime, (9-ethyl-6-nitro-9H-carbazol-3-yl)[4-(2-methoxy-1-methylethoxy)-2-methylphenyl]methanon O-acetyloxime, 2-(benzoyloxyimino)-1-[4-(phenylthio)phenyl]-1-octanone, 2,4,6-trimethylbenzoyldiphenylphosphine oxide, 4-benzoyl-4'-methyldimethyl sulfide, 4-dimethylaminobenzoic acid, methyl 4-dimethylaminobenzoate, ethyl 4-dimethylaminobenzoate, butyl 4-dimethylaminobenzoate, 4-dimethylamino-2-ethylhexylbenzoic acid, 4-dimethylamino-2-isoamylbenzoic acid, benzyl-β-methoxyethyl acetal, benzyl dimethyl ketal, 1-phenyl-1,2-propanedion-2-(O-ethoxycarbonyl) oxime, methyl o-benzoylbenzoate, 2,4-diethylthioxanthone, 2-chlorothioxanthone, 2,4-dimethylthioxanthone, 1-chloro-4-propoxythioxanthone, thioxanthene, 2-chlorothioxanthene, 2,4-diethylthioxanthene, 2-methylthioxanthene, 2-isopropylthioxanthene, 2-ethylanthraquinone, octamethylanthraquinone, 1,2-benzanthraquinone, 2,3-diphenylanthraquinone, azobisisobutyronitrile, benzoyl peroxide, cumene hydroperoxide, 2-mercaptobenzimidazole, 2-mercaptobenzoxazole, 2-mercaptobenzothiazole, 2-(o-chlorophenyl)-4,5-di(m-methoxyphenyl)-imidazolyl dimer, benzophenone, 2-chlorobenzophenone, p,p'-bisdimethylaminobenzophenone, 4,4'-bisdiethylaminobenzophenone, 4,4'-dichlorobenzophenone, 3,3-dimethyl-4-methoxybenzophenone, benzil, benzoin, benzoin methyl ether, benzoin ethyl ether, benzoin isopropyl ether, benzoin-n-butyl ether, benzoin isobutyl ether, benzoin butyl ether, acetophenone, 2,2-diethoxyacetophenone, p-dimethylacetophenone, p-dimethylaminopropiophenone, dichloroacetophenone, trichloroacetophenone, p-tert-butylacetophenone, p-dimethylaminoacetophenone, p-tert-butyltrichloroacetophenone, p-tert-butyldichloroacetophenone, α,α-dichloro-4-phenoxyacetophenone, thioxanthone, 2-methylthioxanthone, 2-isopropylthioxanthone, dibenzosuberone, pentyl 4-dimethylaminobenzoate, 9-phenylacridine, 1,7-bis-(9-acridinyl)heptane, 1,5-bis-(9-acridinyl)pentane, 1,3-bis-(9-acridinyl)propane, p-methoxytriazine, 2,4,6-tris(trichloromethyl)-s-triazine, 2-methyl-4,6-bis(trichloromethyl)-s-triazine, 2-[2-(5-methylfuran-2-yl)ethenyl]-4,6-bis(trichloromethyl)-s-triazine, 2-[2-(furan-2-yl)ethenyl]-4,6-bis(trichloromethyl)-s-triazine, 2-[2-(4-diethylamino-2-methylphenyl)ethenyl]-4,6-bis(trichloromethyl)-s-triazine, 2-[2-(3,4-dimethoxyphenyl)ethenyl]-4,6-bis(trichloromethyl)-s-triazine, 2-(4-methoxyphenyl)-4,6-bis(trichloromethyl)-s-triazine, 2-(4-ethoxystyryl)-4,6-bis(trichloromethyl)-s-triazine, 2-(4-n-butoxyphenyl)-4,6-bis(trichloromethyl)-s-triazine, 2,4-bis-trichloromethyl-6-(3-bromo-4-methoxy)phenyl-s-triazine, 2,4-bis-trichloromethyl-6-(2-bromo-4-methoxy)phenyl-s-triazine, 2,4-bis-trichloromethyl-6-(3-bromo-4-methoxy)styrylphenyl-s-triazine, and 2,4-bis-trichloromethyl-6-(2-bromo-4-methoxy)styrylphenyl-s-triazine.

These photopolymerization initiators may be used either individually or in combination of two or more.

Among these, an oxime ester compound is preferably used as the photopolymerization initiator (C1) from the

viewpoint of sensitivity. Examples of suitable compound as the oxime ester compound include O-acetyl-1[6-(2methylbenzoyl)-9-ethyl-9H-carbazol-3-yl]ethanone oxime, O-acetyl-1-[6-(pyrrole-2-ylcarbonyl)-9-ethyl-9H-carbazol-3-yl]ethanone oxime, and 2-(benzoyloxyimino)-1-[4-phenylthio]phenyl]-1-octanone.

The photopolymerization initiator (C1) preferably includes 2 or more photopolymerization initiators in combination. In this case, it is easy to make effective use of light of a wide range of wavelengths included in the exposed light and to adjust the sensitivity of the curable ink composition to an appropriate range. As mentioned above, the oxime ester compound is preferable as the photopolyrization initiator (C1) due to their sensitivity. Any conventional photopolymerization initiator can be used as a photopolymerization initiator used in combination with the oxime ester compound. A suitable example of an optional photopolymerizable initiator other than the oxime ester compound is a phosphine oxide compound. As the phosphine oxide compound, a phosphine oxide compound having a partial structure represented by the following formula (c5) is preferable.

[Chem. 7]

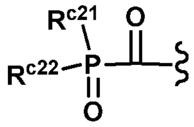

(c5)

In the formula (c5), Rc21 and Rc22 are each independently an alkyl group, a cycloalkyl group, an aryl group, an aliphatic acyl group having 2 or more and 20 or less carbon atoms, or an aromatic acyl group having 7 or more and 20 or less carbon atoms. However, both $R^{c21}$ and $R^{c22}$ cannot be the aliphatic acyl group or the aromatic acyl groups.

The number of carbon atoms of the alkyl group as $R^{c21}$ and $R^{c22}$ is preferably 1 or more and 12 or less, more preferably 1 or more and 8 or less, and further preferably 1 or more and 4 or less. The alkyl group as $R^{c21}$ and $R^{c22}$ can be liner or branched. Specific examples of the alkyl group include a methyl group, an ethyl group, an n-propyl group, an isopropyl group, an n-butyl group, an isobutyl group, a sec-butyl group, a tert-butyl group, an n-pentyl group, an isopentyl group, a tert-pentyl group, an n-hexyl group, an n-heptyl group, an n-octyl group, a 2,4,4-trimethylpentyl group, a 2-ethylhexyl group, an n-nonyl group, an n-decyl group, an n-undecyl group, and an n-dodecyl group.

The number of carbon atoms of the cycloalkyl group as $R^{c21}$ and $R^{c22}$ is preferably 5 or more and 12 or less. Specific examples of the cycloalkyl group include a cyclopentyl group, a cyclohexyl group, a cycloheptyl group, a cyclooctyl group, a cyclononyl group, a cyclodecyl group, a cycloundecyl group, and a cyclododecyl group.

The number of carbon atoms of the aryl group as $R^{c21}$ and $R^{c22}$ is preferably 6 or more and 12 or less. The aryl group may have a substituent. Examples of the substituent include a halogen atom, an alkyl group having 1 or more and 4 or less carbon atoms, an alkoxy group having 1 or more and 4 or less carbon atoms, and the like. Specific examples of the aryl group include a phenyl group and a naphthyl group.

The number of carbon atoms of the aliphatic acyl group as $R^{c21}$ and $R^{c22}$ is 2 or more and 20 or less, preferably 2 or more and 12 or less, more preferably 2 or more and 8 or less, and further preferably 2 or more and 6 or less. The aliphatic acyl group can be liner or branched. Specific examples of the aliphatic acyl group include an acetyl group, a propionyl group, a butanoyl group, a pentanoyl group, a hexanoyl group, a heptanoyl group, an octanoyl group, a nonanoyl group, a decanoyl group, an undecanoyl group, a dodecanoyl group, a tridecanoyl group, a tetradecanoyl group, a pentadecanoyl group, a hexadecanoyl group, a heptadecanoyl group, an octadecanoyl group, a nonadecanoyl group, and an icosanoyl group.

The number of carbon atoms of the aromatic acyl group as $R^{c21}$ and $R^{c22}$ is 7 or more and 20. The aromatic acyl group may have a substituent. Examples of the substituent include a halogen atom, an alkyl group having 1 or more and 4 or less carbon atoms, an alkoxy group having 1 or more and 4 or less carbon atoms, and the like. Specific examples of the aromatic acyl group include a benzoyl group, an o-tolyl group, a m-tolyl group, a p-tolyl group, a 2,6-dimethylbenzoyl group, a 2,6-dimethoxybenzoyl group, a 2,4,6-trimethylbenzoyl group, an $\alpha$-naphthoyl group, and a $\beta$-naphthoyl group.

Specific examples of the phosphine oxide compound having the partial structure represented by the formula (c5) include 2,4,6-trimethylbenzoyldihenylphosphin oxide, bis(2,4,6-trimethylbenzoyl)-phenylphosphine oxide, and bis(2,6-dimethoxybenzoyl)-2,4,4-trimethyl-pentylphosphine oxide.

The content of the photopolymerization initiator (C1) is preferably 0.5% by mass or more and 30% by mass or less, and more preferably 1% by mass or more and 20% by mass or less relative to the mass of the curable ink composition excluding the mass of the solvent (S) described below. When the content of the photopolymerization initiator (C1) is in the above range, it is possible to obtain the curable ink composition with good curability.

The photopolymerization initiator (C1) may be used in combination with a photoinitiator aid. Examples of the photoinitiator aid include triethanolamine, methyldiethanolamine, triisopropanolamine, methyl 4-dimethylaminobenzoate, ethyl 4-dimethylaminobenzoate, isoamyl 4-dimethylaminobenzoate, 2-ethylhexyl 4-dimethylaminobenzoate, 2-dimethylaminoethyl 4-dimethylaminobenzoate, N,N-dimethylparatoluidine, 4,4'-bis(dimethylamino)benzophenone, 9,10-dimethoxyanthracene, 2-ethyl-9,10-dimethoxyanthracene, 9,10-diethoxyanthracene, 2-ethyl-9,10-diethoxyanthracene, 2-mercaptobenzothiazole, 2-mercaptobenzoxazole, 2-mercaptobenzimidazole, 2-mercapto-5-methoxybenzothiazole, 3-mercaptopropionic acid, methyl 3-mercaptopropionate, pentaerythritol tetramercaptoacetate, 3-mercaptopropionate, and the like. These photoinitiator aids may be used either individually or in combination of two or more.

[Solvent (S)]

The curable ink composition may or may not contain a solvent (S). The content of the solvent (S) in the curable ink composition is preferably less than 5% by mass relative to the mass of the curable ink composition, and may be less than 3% by mass, less than 2% by mass, less than 1% by mass, less than 0.5% by mass, or less than 0.3% by mass relative to the mass of the curable ink composition, and the less the better. The type of the solvent is not particularly limited, and the solvent (S) is typically an organic solvent.

Examples of the organic solvent that can be included in the curable ink composition include (poly)alkylene glycol monoalkyl ethers such as ethylene glycol monomethyl ether, ethylene glycol monoethyl ether, ethylene glycol n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether; (poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate; other ethers such as diethylene glycol dimethyl ether, diethylene glycol methylethyl ether, diethylene glycol diethyl ether, and tetrahydrofuran; ketones such as methyl ethyl ketone, cyclohexanone, 2-heptanone, and 3-heptanone; alkyl lactates such as methyl 2-hydroxypropionate and ethyl 2-hydroxypropionate; other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methoxybutyl acetate, 3-methyl-3-methoxybutyl acetate, 3-methyl-3-methoxybutyl propionate, ethyl acetate, n-propyl acetate, isopropyl acetate, n-butyl acetate, isobutyl acetate, n-pentyl formate, isopentyl acetate, n-butyl propionate, ethyl butyrate, n-propyl butyrate, isopropyl butyrate, n-butyl butyrate, methyl pyruvate, ethyl pyruvate, n-propyl pyruvate, methyl acetoacetate, ethyl acetoacetate, and ethyl 2-oxobutanoate; aromatic hydrocarbons such as toluene and xylene; and amides such as N-methylpyrrolidone, N,N-dimethylformamide, and N,N-dimethylacetoamide.

[Other component]

The curable ink composition may include various additives conventionally used in photosensitive compositions and ink compositions in addition to the components described above as long as the objective of the present invention is not impaired. Examples of the preferred additives for use in curable ink compositions include a dispersant, an adhesion promoter such as a silane coupling agent, an antioxidant, an anti-cohesion agent, a defoamer, and a surfactant. The surfactant is not particularly limited, and known components such as fluoro-surfactants and silicone-surfactants can be used. The curable ink composition may include an organic dopant to modify the curable ink composition or cured product thereof. Suitable examples of the organic dopant include phenanthrene (PhA), 9-cyanophenanthrene, triphenylmethane, benzoquinoline, 9-vinylcarbazole, or combinations thereof used to increase the refractive index of the cured product.

[Method for producing curable ink composition]

The curable ink composition is obtained by mixing the above-mentioned components in the predetermined quantities and then stirring the mixture uniformly.

<<Method for producing cured product>>

The curable ink composition described above, typically gives the cured product by a method comprising,

shaping the curable ink composition according to the shape of the cured material to be formed, and,
exposing the shaped curable ink composition and exposing the formed curable ink composition. The cured product is preferably provided as a nanocomposite including a substrate and a film composed of the cured product on the substrate.

For such nanocomposite, a visible light transmittance is preferably 40% or more and 99% or less at a thickness of 10 μm or less.

For example, the cured product produced by above method preferably has a refractive index of 1.5 or higher and 1.76 or lower at a wavelength of 550 nm. The refractive index of the cured product at a wavelength of 550 nm is preferably 1.67 or higher, and more preferably 1.70 or higher. The cured product with such a high refractive index, produced by the above method, is suitably used in optical applications where a high refractive index is required. For example, a film consisting of the cured product of the aforementioned curable ink composition is suitably used as a high refractive index film composing an anti-reflective film and the like in various display panels, such as an organic EL display panel and a liquid crystal display panel.

The thickness of the high refractive index film consisting of the cured product of the aforementioned curable ink composition is not particularly limited, and is selected according to application. Typically, the thickness of the high refractive index film is preferably 1 nm or more and 20 μm or less, and more preferably 50 nm or more and 10 μm or less.

The method of shaping the curable ink composition is not particularly limited and is selected according to the shape of the cured product. The shape of the cured product includes, but is not limited to, a film shape, a lens shape, a line shape, a prism shape, and the like. Among these shapes, the film shape is preferred. The method of shaping the curable ink composition is not particularly limited. When the shape of the cured product is the lens shape, the prism shape, or the like, the curable ink composition may be filled into a mould according to the shape of the cured product using a squeegee and the like. When the shape of the cured material is the line shape and the like, the curable ink composition should be applied on the substrate according to the shape of the cured product. As an application method, for example, printing, such as an inkjet method is exemplified. Examples of the method of applying the curable ink composition in the film shape include methods in which a contact transfer-type applicator such as a roll coater, a reverse coater or a bar coater, and a non-contact type applicator such as a spinner (a rotary applicator), or a curtain flow coater are used. The curable ink composition can also be applied in the form of a film by printing methods such as an inkjet method.

When the curable ink composition includes the solvent (S), the solvent (S) may be removed from the curable ink composition by a method of heating and the like, after shaping the curable ink composition into the desired shape.

For example, after exposure to the curable ink composition shaped into a desired shape, such as a film shape, so that the curable ink composition is not completely cured, it may be shaped to the semi-cured curable ink composition by methods such as imprinting. In this case, the shaped semi-cured curable ink composition is further exposed, and the curable ink composition is sufficiently cured to the desired degree. The aforementioned curable ink composition may also be applied to the 3D printing method to form a cured product of the desired shape by layering a thin film of cured product through repeated inkjet printing and curing by exposure.

As for the exposure method for curing the curable ink composition shaped by the above method, various methods known as curing methods for photosensitive compositions can be applied accordingly. Exposure to the shaped curable ink composition is carried out, for example, by irradiating with active energy rays such as ultraviolet light and excimer laser light.

Exposure to the shaped curable ink composition may be regioselectively carried out, for example by method of exposing through a mask. When the exposure is regioselectively carried out, the patterned cured product is formed by developing the exposed curable ink composition using an organic solvent to remove unexposed areas. When a development process is carried out, it is preferable to remove the developing solution sufficiently after the development, e.g. by drying with heat.

By the method described above, the cured product exhibiting a high refractive index of the desired shape are formed using the aforementioned curable ink composition including no or a small amount of solvent (S). In addition, the cured product obtained using the aforementioned curable ink composition is suitably used in flexible devices, since they have excellent bending resistance and do not crack when bent. For example, when a 10 μm thick film consisting of the aforementioned cured product is wrapped around a cylindrical stainless steel rod with a radius of 6 mm, preferably 2 mm, no cracking occurs.

Hereinafter, other embodiments relating to the above-described curable ink composition are described. The content and type of the photopolymerizable compound (A), the content and type of the metal compound nanocrystals (B), the content and type of the polymerization initiator (C), the content and type of the solvent (S), and the like in the aforementioned curable ink composition can be applied as necessary to other embodiments described below. The content and type of each component composing the compositions of the other embodiments described below can be applied to the aforementioned curable ink compositions as required.

<<Description of other embodiments>>

The present disclosure provides a solvent-free, low-viscosity, high-refractive index, UV-curable, inkjettable formulation comprising capped zirconium oxide nanocrystals in an organic matrix with curing agent.

Said formulations may additionally comprise any of the following components: a wetting agent, an antioxidant,

an adhesion promoter, a leveling agent, a dispersing agent, a plasticizer, a toughener, a thickener, a thinner, a dispersant, or a flexibilizer, or an organic dopant, or other functional additives. These formulations result in high-refractive, high-transparency nanocomposites.

The present disclosure provides the following non-limiting numbered embodiments as further examples of the disclosed technology.

[Embodiment 1]

A formulation comprising a dispersion of at least partially capped zirconium oxide nanocrystals and a matrix comprising at least one of a monomer, an oligomer or a polymer, optionally further comprising a curing agent, a surfactant, a wetting agent, an antioxidant, an adhesion promoter, a leveling agent, a dispersing agent, a plasticizer, a toughener, a thickener, a thinner, a dispersant, or a flexibilizer, or an organic dopant, or other functional additives.

[Embodiment 2]

The formulation of embodiment 1 wherein the matrix comprising one or more of acrylate and/or methacrylate monomers, reactive diluents, a curing agent and, optionally, at least one a surfactant or a wetting agent.

[Embodiment 3]

The formulation of embodiment 1 or 2 wherein the average particle diameter of the at least partially capped nanocrystals is in the range from 1-30nm, preferably less than 20nm as measured by DLS to TEM.

[Embodiment 4]

The formulation of any one of embodiments 1-3 wherein said nanocrystals are at least partially capped with at least one capping agent selected from the group consisting of methyltrimethoxysilane, n-propyltrimethoxysilane, n-propyltriethoxysilane, n-octyltrimethoxysilane, n-octyltriethoxysilane, phenytrimethoxysilane, dodecyltrimethoxysilane, m-ethylphenethyl trimethoxysilane, p-ethylphenethyl trimethoxysilane, 2-[methoxy(polyethyleneoxy)propyl]trimethoxysilane, methoxy(triethyleneoxy)propyltrimethoxysilane, 3-aminopropyltrimethoxysilane, 3-mercaptopropyltrimethoxysilane, 3-(methacryloyloxy)propyl trimethoxysilane, 3-(acryloyloxy)propyl trimethoxysilane, 3-isocyanatopropyltriethoxysilane, 3-isocyanatopropyltrimethoxysilane, glycidoxypropyltrimethoxysilane, vinyltrimethoxysilane, allyltrimethoxysilane, 1-hexenyltrimethoxysilane, 1-octenyltrimethoxysilane, heptanol, hexanol, octanol, benzyl alcohol, phenol, ethanol, propanol, butanol, oleylalcohol, dodecylalcohol, octadecanol, triethylene glycol monomethyl ether, octanoic acid, acetic acid, propionic acid, 2-[2-(2-methoxyethoxy)ethoxy] acetic acid, oleic acid, benzoic acid, stearic acid, trifluoroacetic acid, biphenyl-4-carboxylic acid, 2-(2-methoxyethoxy) acetic acid, methacrylic acid, mono-2-(methacryloyloxy)ethyl succinate, or any combination thereof.

[Embodiment 5]

The formulation of any one of embodiments 1-4 includes mass loadings of the zirconium oxide nanocrystals ranging from 5% by mass-70% by mass.

[Embodiment 6]

The formulation of any one of embodiments 1-5 comprising monofunctional acrylate monomers and/or monofunctional methacrylate monomers having following structure with high refractive index.

[Chem. 8]

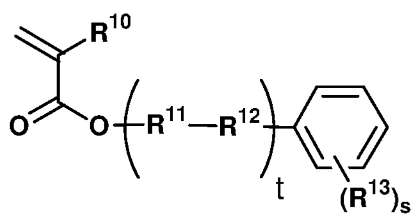

(a-2)

In the formula (a-2), $R^{10}$ is a hydrogen atom or a methyl group, $R^{11}$ is an alkylene group having 1 or more and 3 or less carbon atoms, $R^{12}$ is a single bond, an oxygen atom, or a sulfur atom, $R^{13}$ is an alkyl group having 1 or more and 4 or less carbon atoms, an alkoxy group having 1 or more and 4 or less carbon atoms, a phenoxy group, or a phenyl group, s is an integer of 0 or more and 5 or less, and t is 0, 1 or 2. The formulation may include benzyl (meth)acrylate (BA and BMA), ethylene glycol phenyl ether (meth)acrylate (PEA and PEMA), 2-hydroxy-3-phenoxypropyl (meth)acrylate (HPPA and HPPMA), 2-phenoxy benzyl acrylate (PBA), biphenyl methacrylate (BPMA), 2-phenylphenol methacrylate (PPMA), isobutyl acrylate (IBA), 2- phenylethyl acrylate (2-PEA), 2-(phenylthio)ethyl acrylate (PTEA), or combinations thereof.

[Embodiment 7]

The formulation of any one of embodiments 1-6 further comprising di-, tri-, tetra- and penta-functional (meth)acrylate monomers, such as, 1,6-hexanediol di(meth)acrylate (HDDA and HDDMA), di(ethyleneglycol) di(meth)acrylate (DEGDA and DEGDMA), ethylene glycol diacrylate, glycerol 1,3-diglycerol diacrylate, tri(propylene glycol) diacrylate, trimethylolpropane tri(meth)acrylate (TMPTA and TMPTMA), trimethylolpropane ethoxylate tri(meth)acrylate (EOTMPTA and EOTMPTMA), 1,6-hexanediol ethoxylate diacrylate, pentaerythritol tetraacrylate (PETA), bis(methacryloylthiophenyl)sulfide (BMTPS) and dipentaerythritol penta- /hexa-acrylate (DPHA).

[Embodiment 8]

The formulation of any one of embodiments 1-7 further comprising a monomer having general structure (a-1).

[Chem. 9]

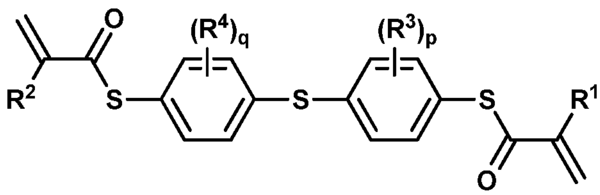

(a-1)

In the formula (a-1), $R^1$ and $R^2$ are each independently a hydrogen atom or a methyl group, $R^3$ and $Ra^4$ are each independently an alkyl group having 1 or more and 5 or less carbon atoms, and p and q are each independently 0 or 1. One example is bis(4-methacryloylthiophenyl)sulfide (BMTPS).

[Embodiment 9]

The formulation of any one of embodiments 1-8 further comprising reactive diluents. Examples of the reactive diluents include 1-vinyl-2-pyrrolidone (NVP), N-vinyl caprolactam, 2-(2-vinyloxyethoxy) ethyl (meth)acrylate, isobutyl acrylate, styrene (STY), 4-methylstyrene (4MS), 4-vinylanisole (4VA) and divinylbenzene (DVB). For example, 1-vinyl-2-pyrrolidone is added to the formulation of any one of embodiments 1-8 to improve surface cure or tack, the % by mass of the reactive diluent is 10-80% by mass with respect to the total monomer content, and the preferred % by mass of the reactive diluent is 25-70% by mass.

[Embodiment 10]

The formulation of any one of embodiments 1-9 further comprising di-, tri-, tetra-functional thiol crosslinkers. For example, the formulation includes trimethylolpropane tris(3-mercaptopropionate).

[Embodiment 11]

The formulation of any one of embodiments 1-9 comprising reactive organic dopants. The formulation includes phenanthrene (PhA) or 9-vinylcarbazole (NVCb), and concentrations of organic dopants can range from 1% by mass-50% by mass.

[Embodiment 12]

The formulation of any one of embodiments 1-11 further comprising surfactants or a combination of surfactants. For example, surfactants are polyether-modified siloxanes, fluoro-surfactants, that are either non-reactive or reactive in the acrylate monomer system, and concentrations of said surfactants within the total formulation is in the range from 0.1% by mass-2.0% by mass, preferably in the range from 0.5% by mass-1.0% by mass.

[Embodiment 13]

The formulation of any one of embodiment 1-12 optionally further comprising scattering particles (such as titanium dioxide, aluminum oxide, silicon dioxide, and low- and high-index polymer particles. Scatter particle size can range 100 nm-400 nm. Concentrations of said scattering particles within the total formulation is 0.1% by mass-30.0% by mass, and preferably 0.5% by mass-17.0% by mass.

[Embodiment 14]

The formulation of any one of embodiments 1-13 further comprising curing agents or photopolymerization initiators. For example, the formulation includes Irgacure 184, Irgacure 819, TPO, Ebercryl P39, or Ebercryl P115. Concentrations of said photopolymerization initiator within the total formulation is in the range from 0.1% by mass-20% by mass, preferably in the range from 1.0% by mass-4.0% by mass with respect to the monomer content.

[Embodiment 15]

The formulation of any one of embodiments 1-14 wherein said dispersion does not contain benzyl methacrylate (BMA) or trimethylolpropane triacrylate (TMPTA).

[Embodiment 16]

The formulation of any one of embodiments 1 - 15 wherein the formulation is solvent-free or solvent-less.

[Embodiment 17]

The formulation of embodiment 16 wherein a viscosity is within the range of 5 cP-100 cP, when measured at 25 °C with a Brookfield RVDV II+ cone and plate viscometer. The viscosity is preferably within the range of 5 cP-20 cP at 25 °C. When cartridge heating is applicable, the viscosity at 25 °C can be 15 cP-100 cP for cartridge temperature between 35 °C -100 °C. Alternatively, the viscosity of the formulation at 25 °C is 5 cP-10 cP, 10 cP-15 cP, 15 cP-20cP, 20 cP-30 cP, 30 cP-50 cP, or 50 cP-100 cP. For deposition (film formation) methods other than inkjet-printing, the viscosity can range from 100 cP-1000 cP, 1000 cP-5000 cP, and 5000 cP-12000 cP.

[Embodiment 18]

The formulation of embodiment 16 wherein the zirconium oxide nanocrystals loading is in the range of 35% by mass-40% by mass, 40% by mass-45% by mass, 45% by mass-50% by mass, 50% by mass-55% by mass, 55% by mass-60% by mass, or 60% by mass-65% by mass.

[Embodiment 19]

The formulation of embodiment 16 wherein a refractive index is 1.52-1.56, 1.56-1.58, 1.58-1.60, 1.60-1.62, 1.62-1.64, 1.64-1.66, 1.66-1.68, 1.68-1.70, 1.70-1.72, 1.72-1.74, or 1.74-1.76.

[Embodiment 20]

The formulation of embodiment 16 wherein a surface tension of the formulation is within the range of 20-25 dyne/cm, 25-30 dyne/cm, 30-35 dyne/cm, or 35-40 dyne/cm, when measured at 25 °C with a Rame-Hart surface tensiometer.

[Embodiment 21]

The formulation of embodiment 16 wherein a transmittance (%T) of the formulation is 99%-95%, 95%-90%, 90%-85%, 85%-80%, 80%-75%, 75%-70%, 70%-65%, 65%-60%, 60%-55%, 55%-50%, 50%-45%, 45%-40%, 40%-35%, 35%-30%, 30%-25%, 25%-20%, 20%-15%, or 15%-10%.

[Embodiment 22]

The formulation of any one of embodiments 1-21 wherein the formulation polarity is at least 4.0%-8.0%

This ensure little to no nozzle plate wetting of the inkjet printhead with an appropriate surfactant or surfactants at high enough concentrations. Similar observations on minimum polarity values for good inkjet quality was referenced in UK patent GB 2517592 A (Sericol Ltd, A. Runacre, M. Pemble, G. Osborne, 25.02.2015). The polarity is defined to be the ratio of the polar component of the surface tension divided by the total surface tension of the formulation. The polar component of the surface tension is determined through measurement of contact angle on a Teflon substrate and surface tension of the formulation with a Rame-Hart goniometer and surface tensiometer under the Owens, Wendt, Rabel and Kaelble method (REF: https://www.kruss-scientific.com/services/education-theory/glossary/owens-wendt-rabel-and kaelble-owrk-method/). Table 1 displays measured values of contact angles on a Teflon substrate, surface tension and polarity for various monomers and formulations.

[Table 1]

| Test sample or formulation | Teflon contact angle (°) | Static surface tension (dyne/cm) | Polar component of suface tension (dyne/cm) | Dispersive component of surface tension (dyne/cm) | Polarity (%) |
|---|---|---|---|---|---|
| BA | 68.7±3.6 | 36.7 | -0.1±3.2 | 36.8±3.2 | -0.3 |
| PEA | 72.2±2.0 | 38.4 | 1.4±1.8 | 37.0±1.8 | 3.6 |
| NVP | 71.9±4.1 | 38.1 | 1.4±3.8 | 36.7±3.8 | 3.7 |
| PBA | 82.8±4.7 | 42.0 | 9.2±4.7 | 32.9±4.7 | 21.9 |
| BYK 378 | 47.8±2.0 | 23.9 | 0.4±0.7 | 23.5±0.7 | 1.8 |
| Nanocomposite B1 | 71.3±3.5 | 36.0 | 2.8±2.9 | 33.2±2.9 | 7.8 |
| Nanocomposite C1 | 71.9±2.8 | 35.4 | 3.8±2.2 | 31.5±2.2 | 10.8 |
| Nanocomposite D3 | 72.6±4.0 | 36.1 | 3.8±3.3 | 32.2±3.3 | 10.5 |

[Embodiment 23]

The formulation of any one of embodiments 1-22 are inkjet-printable in that droplets can be ejected from printhead types such as Dimatix DMC, Fujifilm SG1024/MA, Konica Minolta KM1024i with droplet volumes between 6-40 pL at drop velocities from 3-9 m/s. Applications of inkjet printable formulations such as the ones described in this disclosure can consist of blanket films, specific patterns and microlenses.

[Embodiment 24]

The formulation of any one of embodiments 1-23 can be deposited into films via spin coating, slot-die coating, screen-printing, ink-jet printing, dip coating, draw-bar coating, roll-to-roll printing, spray coating, dispensing, volume casting, screen printing and any combination thereof.

[Embodiment 25]

A nanocomposite comprising a cured or partially cured formulation of any one of embodiments 1-24 wherein the formulation is cured via UV irradiation under UV LED sources with wavelengths at 365 nm, 385 nm, 395 nm or 405 nm. Films from said formulation can also be UV-cured with a mercury "D", "H" and "V" lamp(s). UV doses can range

from 0.1 J/cm$^2$-10 J/cm$^2$, and preferably 0.5 J/cm$^2$-2 J/cm$^2$. UV cure can occur under air or inert conditions, specifically nitrogen atmosphere.

[Embodiment 26]

The nanocomposite of embodiment 25 wherein the film thickness ranges from 50 nm to 100 μm. Preferred film thickness values can range from 1 μm-20 μm.

[Embodiment 27]

The nanocomposite of embodiment 25 wherein the film of at least 1 μm has a surface roughness of 5 nm-4 nm, 4 nm-3 nm, 3 nm-2 nm, 2 nm-1 nm, 1 nm-0.5 nm, or 0.5 nm- 0.1 nm.

[Embodiment 28]

The nanocomposite of embodiment 25 wherein the coating or film possesses high film uniformity (or low film non-uniformity) from edge to center. Film non-uniformity is defined as follows.

[Math. 1]

$$\%NU = \frac{T_{MAX} - T_{MIN}}{2T_{AVG}} x\, 100\%$$

Where %NU is the non-uniformity of a film's thickness, and $T_{MAX}$, $T_{MIN}$ and $T_{AVG}$ are the maximum measured thickness, minimum measured thickness and average thickness of a film, respectively. %NU values can range from 3%-20%. Preferred %NU values are 5%-10%.

[Embodiment 29]

The formulation of any one of embodiments 1-23 wherein the formulation can be deposited onto an optically transparent hydrophilic substrate, such as fused silica, soda-lime, borosilicate glass, aluminum silicate, silicon nitride, indium tin oxide substrates. Conversely, the formulations may be deposited onto an optically transparent hydrophobic substrate, such as polyethylene terephthalate, polyimide, acrylic polymers, cyclic olefin copolymer, polycarbonate, polystyrene, silicone.

[Embodiment 30]

The nanocomposite of embodiment 25 wherein the %T of the cured nanocomposite at thicknesses less than 10 microns is 99%-95%, 95%-90%, 90%-85%, 85%-80%, 80%-75%, 75%-70%, 70%-65%, 65%-60%, 60%-55%, 55%-50%, 50%-45%, 45%-40%, 40%-35%, or 35%-30%, 30%-25%, 25%-20%, 20%-15%, or 15%-10% in the visible wavelengths.

[Embodiment 31]

The nanocomposite of embodiment 25 wherein the cured nanocomposite refractive index is 1.52-1.56, 1.56-1.58, 1.58-1.60, 1.60-1.62, 1.62-1.64, 1.64-1.66, 1.66-1.68, 1.68-1.70, 1.70-1.72, 1.72-1.74, or 1.74-1.76 at 550nm.

<Detailed description of Tables>

Table 1: Table 1 shows contact angles on a Teflon (Registered Trademark) surface and static surface tension values at 25 °C and calculated polar, dispersive components of the surface tension and polarity (defined as the ratio of the polar component of the static surface tension divided by the total static surface tension for various monomers and formulations).

Table2: Table 2 shows nanocomposite formulations A1-A10 with different weight percent of capped zirconia and weight rations of crosslinkers as described in Reference Example 1 and the respective viscosities.

Table 3: Table 3 shows formulations with different weight percent of capped zirconia and weight ratios of

crosslinkers as described in Reference Examples 4 and 5 and their respective viscosities.

Table 4: Table 4 shows formulations with different weight percent of capped zirconia and weight ratios of monomers and PhA additions as described in Reference Example 6 and their respective viscosities and refractive indices.

Table 5: Table 5 shows formulations with different weight percent of capped zirconia and weight ratios of monomers as described in Reference Example 7 and their respective viscosities and refractive indices.

Table 6: Table 6 shows additional formulations with different weight percent of capped zirconia and weight rations of monomers as described in Reference Example 7 and their respective viscosities and refractive indices.

[Characterization]

The presently disclosed formulation may be analyzed using a TA Instrument Q500 thermal gravimetric analyzer (TGA) to determine the inorganic solid content. The TGA is run with nanocrystal dispersions in a solvent with boiling point of lower than 200 °C to determine the organic content of capped nanocrystals. The percent mass at 200 °C relative to the initial mass is regarded as capped nanocrystals and the percent mass at 700 °C relative to the initial mass is regarded as inorganic portion of the capped nanocrystal. The percent organics of capped nanocrystals (%Org) is defined as the difference between the percent mass at 200 °C (M200C) and at 700 °C (M700C) divided by the percent mass at 200 °C.

[Math. 2]

$$\%Org = \frac{\mathrm{M200C} - \mathrm{M700C}}{\mathrm{M200C}}\ x\ 100\%$$

For a nanocomposite or formulation, the percent solids (%S) is calculated from the inorganic content of the nanocomposite and organic content of the capped nanocrystals measured in solvent.

[Math. 3]

$$\%S = \frac{\mathrm{M700C}}{100\% - \%\mathrm{Org}}\ x\ 100\%$$

The capped nanocrystals of the presently disclosed formulation may constitute less than 10% by mass of the total formulation, or 10% by mass-20% by mass, 20% by mass-30% by mass, 30% by mass-40% by mass, 40% by mass-50% by mass, 50% by mass-60% by mass, 60% by mass-70% by mass, 70% by mass-80% by mass, 80% by mass-90% by mass, or 90% by mass-93% by mass relative to the total formulation.

Optical transmittance is a common technique to evaluate the quality of a dispersion, formulation, and a nanocomposite film or coating. Light propagating through a sample can be absorbed, scattered, or transmitted. The normal transmittance at a given wavelength is defined as $Tn=I/I_0$, where $I_0$ is the intensity of incident light and I is the intensity of the light in the forward direction collected by the detector, which includes both light that is transmitted without scattering and light that is scattered into the forward direction. Theoretically the forward direction is defined as the same direction of the incident light, and however the detector usually collects light within a small solid angle around this direction due to the finite size of the detector. This transmittance is called normal transmittance or just transmittance, throughout this disclosure. The absorbance of a sample, i.e., optical density (OD), at a given wavelength is defined as follows.

[Math. 4]

$$OD = -\log_{10}\frac{I}{I_0}$$

When measuring normal transmittance, measurement artifacts, such as Fresnel reflections off various interfaces and absorption by cuvette walls, need to be accounted for and removed. This can be taken care of by using a reference, either by measuring the sample and reference side by side in the instrument, or by measuring the sample and reference

sequentially and then correcting the data mathematically afterward. The liquid nanocrystal dispersion sample can be measured in a cuvette made of glass, quartz, or plastic, and due to the finite thickness of the cuvette wall, there are for interfaces where Fresnel reflections can occur, and two walls where absorption can occur. Using a cuvette with same material, wall thickness, and path length as the reference may produce results with enough accuracy.

For thin-film nanocomposite, the coated substrate is measured against a blank substrate made of same material with same thickness and surface smoothness, either side by side, or sequentially, to correct absorption and reflection at interfaces. Because the coating may have a different refractive index than the substrate and air, the reflection off the front face of the film and the substrate may be slightly different, often resulting in higher than 100% transmittance based on the algorithm used by the spectrophotometer. The effect can be corrected but the step of correcting is complicated, and the error by the effect is usually small. For convenience, the transmittance data shown in this disclosure are as measured without correction.

Light that is neither transmitted nor scattered nor reflected is absorbed. The absorbance can be calculated by subtracting the transmitted, scattered, and reflected light from the incident light.

The optical transmittance at 450 nm of the presently disclosed formulation with no curing agent, when measured in a cuvette with 1 cm path length using a Perkin Elmer Lambda 850 spectrophotometer, may be 99%-95%, or 95%-90%, or 90%-85%, or 85%-80%, 80%-75%, or 75%-70%, or 70%-65%, or 65%-60%, or 60%-55%, or 55%-50%, or 50%-45%, or 45%-40%, or 40%-35%, or 35%-30%, or 30%-25%, or 25%-20%, or 20%-15%, or 15%-10%.

The optical transmittance at 400 nm of the presently disclosed formulation with no curing agent, when measured in a cuvette with 1 cm path length using a Perkin Elmer Lambda 850 spectrophotometer, may be 99%-95%, or 95%-90%, or 90%-85%, or 85%-80%, or 80%-75%, or 75%-70%, or 70%-65%, or 65%-60%, or 60%-55%, or 55%-50%, or 50%-45%, or 45%-40%, or 40%-35%, or 35%-30%, or 30%-25%, or 25%-20%, or 20%-15%, or 15%-10%.

Formulations of the present disclosure may have a viscosity of about 1 cP to about 12,000 cP. Formulations of the present disclosure may have a viscosity of about 1 cP, about 2 cP, about 5 cP, about 10 cP, about 15 cP, about 20 cP, about 25 cP, about 30 cP, about 40 cP, about 50 cP, about 60 cP, about 75 cP, about 100 cP, about 200 cP, 500 cP, or about 1,000 cP, when measured with a Brookfield RVDV II+ cone and plate viscometer measured at 25 °C.

[Formulation Components and Properties]

The present disclosure provides solvent-free, low-viscosity, high-transparency, high-RI, inkjet printable formulations comprising at least partially capped zirconium oxide nanocrystals dispersed in a monomer, oligomer, polymer or mixtures thereof. Said formulations may also include, a curing agent, an adhesion promoter, a wetting agent, a leveling agent, a dispersing agent, a viscosity modifier, organic dopants and an antioxidant. These formulations make it possible to produce nanocomposites and thin film coatings with high refractive indices and high optical transparency. These formulations, specific to inkjet printing applications, shall have a strong resistance to inkjet nozzle faceplate wetting and appropriate wettability to desired substrates. A liquid wets to a specific solid surface and a contact angle forms once the liquid has reached equilibrium. Very low values of contact angle are typically less than 10°, and the liquid has high wettability with said surface. With high wettability uniform coatings can be achieved. Contact angles greater than 45° are suggestive of partially wetted or non-wetted cases. For such cases irregular surfaces and possible lens printing are possible outcomes and are often indicative of high surface tension liquids on low surface energy surfaces.

The resultant nanocomposite films shall have moderate to high degrees of cure, good adhesion to the intended substrates and good film uniformity.

The capped nanocrystals of the present disclosure have a narrow size distribution, with an average size range of 3-10 nm, measured with Transmission Electron Microscopy (TEM).

The capped nanocrystals of the present disclosure are, for example, monodispersed with an average size less than of 20 nm, measured with a Malvern Zetasizer Nano S Dynamic Light Scattering (DLS) instrument when dispersed in a solvent, such as PGMEA, at a concentration less than or equal to 5% by mass. The DLS measures the particle size together with the solvent shell surrounding the nanocrystal. The capped nanocrystals of the present disclosure maintain dispersibility or remain agglomeration-free in a polymer or monomer matrix. Such physical characteristics of the presently disclosed materials not only reduce light scattering but also make for improved processability.

The capped nanocrystals of the presented disclosure are prepared by a method described in United States patent number 8592511, entire content of which is incorporated herein as a reference.

The nanocrystals of the present disclosure may be at least partially capped with specific functional group, also referred to as capping agents, or capping groups. These specific functional groups are grafted to the surface of the nanocrystals. The capping reaction can be performed in the presence of water. As used herein capped nanocrystals and at least partially capped nanocrystals are functionally equivalent.

The capping agent of capped nanocrystals in the presently disclosed formulation may include organosilanes, organocarboxylic acids and/or organoalcohols. Examples of silanes of the present disclosure include, but are not limited to, methyltrimethoxysilane, n-propyltrimethoxysilane, n propyltriethoxysilane, n-octyltrimethoxysilane, n-octyltriethoxysilane, phenytrimethoxysilane, dodecyltrimethoxysilane, m-ethylphenethyl trimethoxysilane, p-ethylphenethyl trimethoxysilane, 2-[methoxy(polyethyleneoxy)propyl] trimethoxysilane, methoxy(triethyleneoxy)propyltrimethoxysilane, 3-aminopropyltrimethoxysilane, 3-mercaptopropyltrimethoxysilane, 3-(methacryloyloxy)propyl trimethoxysilane, 3-(acryloyloxy)propyl trimethoxysilane, 3-isocyanatopropyltriethoxysilane, 3-isocyanatopropyltrimethoxysilane, and glycidoxypropyltrimethoxysilane, vinyltrimethoxysilane, allyltrimethoxysilane, 1-hexenyltrimethoxysilane, 1-octenyltrimethoxysilane or any combination thereof.

Examples of organoalcohols of the present disclosure include, but are not limited to, heptanol, hexanol, octanol, benzyl alcohol, phenol, ethanol, propanol, butanol, oleylalcohol, dodecylalcohol, octadecanol and triethylene glycol monomethyl ether or any combination thereof.

Examples of organocarboxylic acids of the present disclosure include, but are not limited to, octanoic acid, acetic acid, propionic acid, 2-[2-(2-methoxyethoxy)ethoxy] acetic acid, oleic acid, benzoic acid, stearic acid, trifluoroacetic acid, biphenyl-4-carboxylic acid, 2-(2-methoxyethoxy)acetic acid, methacrylic acid, mono-2-(methacryloyloxy)ethyl succinate, or any combination thereof.

The oligomer, and/or polymer of the present disclosure may include a (meth)acrylic compound having following general structure.

[Chem. 10]

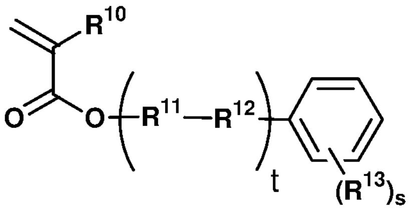

**(a-2)**

In the general formula (a-2), $R^{10}$ represents a hydrogen atom or a methyl group; $R^{11}$ represents an alkylene group having 1-3 carbon atoms; $R^{12}$ represents a single bond, an oxygen atom, or a sulfur atom; $R^{13}$ represents an alkyl group having 1-4 carbon atoms, a phenyl group, an alkoxy group having 1-4 carbon atoms, or a phenoxy group; s represents an integer of 0-5, t represents 0, 1, or 2.

The acrylic monomer, oligomer, and/or polymer of the presently disclosed formulation may include benzyl (meth)acrylate (BA and BMA), trimethylolpropane tri(meth)acrylate (TMPTA and TMPTMA), trimethylolpropane ethoxylate tri(meth)acrylate (EOTMPTA and EPTMPTMA), 1,6-hexanediol di(meth)acrylate (HDDA and HDDMA), di(ethyleneglycol) di(meth)acrylate (DEGDA and DEGDMA), ethylene glycol diacrylate, glycerol 1,3-diglycerolate diacrylate, tri(propylene glycol) diacrylate, 1,6-hexanediol ethoxylate diacrylate, ethylene glycol phenyl ether (meth)acrylate (PEA and PEMA), 2-hydroxy-3-phenoxypropyl acrylate (HPPA), 2-hydroxy-3-phenoxypropyl methacrylate (HPPMA), 2-phenoxy benzyl acrylate (PBA), biphenyl methacrylate (BPMA), 2-phenylphenol methacrylate (PPMA), isobutyl acrylate (IBA), 2-phenylethyl acrylate (2-PEA), 2-(phenylthio)ethyl acrylate (PTEa), or any combination thereof.

The vinyl monomer, oligomer, and/or polymer of the presently disclosed formulation may include N-vinyl pyrrolidone (NVP), phenyl norbornene, styrene (STY), 4-methylstyrene, 4-vinylanisole, divinylbenzene or any combination thereof. The presently disclosed formulation may include mercapto functional monomers having following chemical formula.

[Chem. 11]

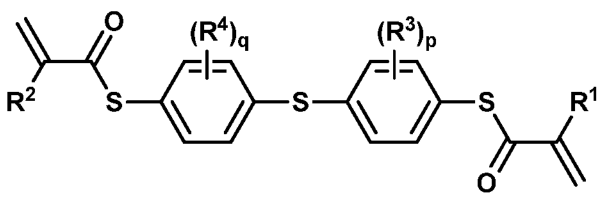

**(a-1)**

In the general formula (a-1), $R^1$ and $R^2$ respectively represents a hydrogen atom, or a methyl group; $R^3$ and $R^4$ respectively represents an alkyl group having 1-5 carbon atoms; p and q respectively represents 0 or 1. One example is bis(4-methacryloylthiophenyl)sulfide (BMTPS). Other sulfur-containing functional monomer having other structure may include trimethylolpropane tri(3-mercaptopropionate (TMPMP), pentaerythritol tetra(3-mercaptopropionate) (PETMP), ethylene glycol dimercaptopropionate, ethylene glycol dimercaptoacetate, thiodiethanethiol, bis(mercaptoethyl)ether, 2,2'-(ethylenedioxy)diethanethiol, and combinations thereof.

The presently disclosed formulation may include an organic dopant to increase the refractive index of the film or coating. The organic dopant, if present, may include phenanthrene (PhA), 9-cyanophenanthrene, triphenyl methane, benzoquinone, 9-vinylcarbazole and combinations thereof.

Curing agents of the presently disclosed formulation may comprise a photopolymerization initiator. Any photopolymerization initiator, provided it doesn't limit optical and physical performance of the nanocomposite, can be used as long as it is capable of producing an active species, such as a radical with light (UV) energy.

Photopolymerization initiator curing agents may include amines such as Ebecryl (Registered Trademark) P115, or benzophenone and its derivatives such as Ebecryl (Registered Trademark) P39, benzophenone, SpeedCure BEM (Lambson USA Ltd, Rutherford, CT, USA), or organophosphines such as diphenyl(2,4,6-trimethylbenzoyl)-phosphine oxide (TPO), Irgacure (Registered Trademark) 819, or Irgacure (Registered Trademark) 184 (BASF USA, Florham Park, NJ, USA), or any combination thereof.

Although the formulations described herein focus on the application of UV radiation for cure, thermal cure is entirely possible with appropriate thermo-initiators, such as 2,2'-azobisisobutyronitrile (AIBN).

A combination of more than one curing agent may be advantageous in certain circumstances known to one of ordinary skill.

The amount of curing agent of presently disclosed formulation may be present in an amount of less than 0.5% by mass of the monomer, oligomer, and/or polymer, or 0.5%-1% by mass of the monomer, oligomer, and/or polymer, or 1%-2% by mass of the monomer, oligomer, and/or polymer, or 2%-3% by mass of the monomer, oligomer, and/or polymer, or 3%-4% by mass of the monomer, oligomer, and/or polymer, or 4%-5% by mass of the monomer, oligomer, and/or polymer, or 5%-6% by mass of the monomer, oligomer, and/or polymer, or 6%-7% by mass of the monomer, oligomer, and/or polymer, or 7%-8% by mass of the monomer, oligomer, and/or polymer, or 8%-15% by mass of the monomer, oligomer, and/or polymer.

The adhesion promoter, if present may be selected from organo-metallic compounds, such as organo functional silane, or from functionalized monomers and oligomers. Some organo functional silane adhesion promoters that are suitable contain amino or methacryloxy groups. Exemplary silane adhesion promoters include, but are not limited to 3-aminopropyltriethoxysilane, 3-[(methacryloyloxy)propyl]trimethoxysilane, ureidopropyltrimethoxysilane, and trimethoxy[3-(methylamino)propyl]silane. Functionalized monomer and oligomer adhesion promoters include, but are not limited to, CN820, CN146 (Sartomer Americas, Exton, PA, USA), SR9051, SR9053 (Sartomer Americas, Exton, PA, USA), and Ebecryl 171 (Allnex USA Inc., Wallingford, CT, USA).

Adhesion promoter of the presently disclosed formulation may be present in an amount of less than 0.5% by mass of the monomer, oligomer, and/or polymer, or 0.5-1% by mass of the monomer, oligomer and/or polymer, or 1-5% by mass of the monomer, oligomer, and/or polymer, or 5-10% by mass of the monomer, oligomer, and/or polymer, or 10-15% by mass of the monomer, oligomer, and/or polymer, or 15-30% by mass of the monomer, oligomer, and/or polymer.

A surfactant, which can act as a wetting agent, leveling agent, defoaming agent and dispersing agent may be present to reduce the surface tension of the formulation and thereby improve the flow properties of the formulation to produce a more uniform dried coating surface.

The surfactant may be on-ionic, anionic, or a combination thereof. Representative examples of suitable wetting agents include but are not limited to siloxane surfactants such as BYK-331, BYK-377, BYK-378, (BYK Chemie, GMBH) and fluoro-surfactants such as Novec 4430, Novec 4432, and Novec 4434 (3M, St. Paul, MN, USA), and Capstone FS-3100 (The Chemours Company, Wilmington, DE, USA).

A leveling agent may be used. Examples of leveling agent, if present, may be a polyacrylate compound such as BYK-352, BYK-353, BYK-356 and BYK-361N; an aralkyl modified polymethylalkylsiloxane, such as BYK-322, BYK-323, and BYK-350 (BYK Chemie, GMBH) and a polyether-modified acryl functional siloxane, such as BYK-UV350.

Examples of the dispersing agent may include, without limitation, polyalkylene glycols and esters thereof, polyoxyalkylenes, polyhydric alcohol ester alkylene oxide addition products, alcohol alkylene oxide addition products, sulfonate esters, sulfonate salts, carboxylate esters, carboxylate salts, alkylamide alkylene oxide addition products, alkyl amines, and the like, and may be used singularly or as a mixture of two or more.

Commercially available examples of the dispersing agent may include without limitation DISPERBYK-101, DISPERBYK-130, DISPERBYK-140, DISPERBYK-160, DISPERBYK-161, DISPERBYK-162, DISPERBYK-163, DISPERBYK-164, DISPERBYK-165, DISPERBYK-166, DISPERBYK-170, DISPERBYK-171, DISPERBYK-182, DISPERBYK-2000, DISPERBYK-2001 (BYK Chemie, GMBH), Solsperse 32000, Solsperse 36000, Solsperse 28000, Solsperse 20000, Solsperse 41000, and Solsperse 45000 (Lubrizol, Wickliffe, OH, USA).

The surfactant of the presently disclosed formulation, for the purpose of improving wetting properties, may be present in amount of less than 0.05% by mass of the total formulation, or 0.05-0.1% by mass of the total formulation, or 0.1-0.5 % by mass of the total formulation, or 0.5-1% by mass of the total formulation, or 1-2% by mass of the total formulation, or 2-5% by mass of the total formulation.

For the purposes of aiding in dispersion the amount of surfactant of the presently disclosed formulation may vary depending on the material being dispersed. The amount of dispersing agent may be less than 3% by mass of the material being dispersed or 3-5% by mass of the material being dispersed, or 5-10% by mass of the material being dispersed, or 10-20% by mass of the material being dispersed, or 20-40% by mass of the material being dispersed, or 40-60% by mass of the material being dispersed, or 60-80% by mass of the material being dispersed, or 80-100% by mass of the material being dispersed, or 100- 150% by mass of the material being dispersed.

Antioxidant agents of the presently disclosed formulation may include at least one primary antioxidant. This primary antioxidant may be selected from sterically hindered phenols, such as Irganox 1010, Irganox 1076, SongNox (Registered Trademark) 1073, SongNox (Registered Trademark) 2450 or phenolic phosphites such as SongNox (Registered Trademark) 1680 or phosphines such as Irgaphos 168 (BASF USA, Florham Park, NJ, USA) or aromatic secondary amines or SongLight (Registered Trademark) 6220 (Songwon Americas, Friendwood, TX, USA) .

Formulations of the present disclosure may contain at least one secondary antioxidant. This secondary antioxidant is preferably chosen from compounds comprising at least one unit formed from a sulfur linked to two carbon atoms. Representative examples of the secondary antioxidant are di(t-butyl) hydroxyphenylamino bisoctylthiotriazine and Irganox PS800 (BASF USA, Florham Park, NJ, USA).

The amount of antioxidant of the presently disclosed formulation may be less than 0.5% by mass of the total formulation, or 0.5% by mass-1% by mass of the total formulation, or 1% by mass-2% by mass of the total formulation, or 2% by mass-3% by mass of the total formulation, or 3% by mass-4% by mass of the total formulation, or 4% by mass-5% by mass of the total formulation, or 5% by mass-6% by mass of the total formulation, or 6% by mass-7% by mass of the total formulation, 7% by mass-8% by mass of the total formulation, or 8% by mass-10% by mass of the total formulation.

The presently disclosed formulation may further comprise plasticizer, toughener, thickener, thinner, dispersant, or flexibilizer, or other functional additives.

The presently disclosed formulation may further comprise solvent in small concentrations for maintaining lower viscosities (within the definitions of "solvent-free" and "solvent-less"). The choice of solvent depends entirely on the capped zirconia type and selected monomers, oligomers and polymers of the formulation.

Examples of common solvents that range from low to high boiling point are alcohols, glycols, methyl acetates, ethyl acetates, esters, ketones, glycol ethers, glycol esters, such as propylene glycol monomethyl ether acetate (PGMEA), propylene glycol monomethyl ether (PGME), ethylene glycol monobutyl ether acetate, diethylene glycol monobutyl ether acetate, diethylene glycol butyl ether, diethylene glycol monoethyl ether acetate, dipropylene glycol methyl ether acetate, butoxy ethanol, butoxy propanol, ethoxy ethyl acetate, butoxy ethyl acetate, 2-(isopentyloxy)ethanol, 2-(hexyloxy)ethanol, diethylene glycol, diethylene glycol monomethyl ether, diethylene glycol monoethyl ether, triethylene glycol, triethylene glycol monomethyl ether, dipropylene glycol, dipropylene glycol monomethyl ether, and dipropylene glycol monoethyl ether, ethyl acetate, THF, acetone, any combinations thereof.

Formulations of present disclosure may have a tunable viscosity, and/or a viscosity that can be controlled by one or more of components of the formulation. Parameters that can control viscosity of the formulation include, but are not limited to, the average length, and molecular weight, of a monomer, oligomer, and/or polymer; as well as the presence of a solvent and the concentration of a solvent, the presence of a thickener (i.e., a viscosity-modifying component) and the concentration of a thickener, the particle size of a component present in the formulation, temperature, and combinations thereof.

The presently disclosed formulation may be stable for more than 1 week, or more than 2 weeks, or more than 3 weeks, or more than 6 weeks, or more than 8 weeks, or more than 3 months, or more than 6 months, or more than 12 months, or more than 36 months, with no significant increase in viscosity. The change in formulation viscosity should be less than 10%, or less than 20%, or less than 30%, or less than 40%, or less than 50%, or less than 100%.

Furthermore, the change in the optical transmittance of the formulations should be less than 10% decrease in transmittance, or less than 20% decrease in transmittance, or less than 30% decrease in transmittance, or less than 40% decrease in transmittance, or less than 50% decrease in transmittance at 450 nm. When a drop is ejected from the nozzle, a ligament or tail appears and contracts to form a spherical drop. If the ligament does not contract quickly enough or is too long, then small satellites can form and cause difficulties with printed films. Stable and consistent ejection of drop with no tails or satellites is important for optimal jetting performance and print uniformity. Additionally, inks should be stable over long periods of time for manufacturability. Shelf lifes, time prior to use, should be many months, and pot life, time during use, and jetting stabilities should cover a day or more.

Jetting of the formulation of the present disclosure for the purpose of inkjet-printing can be stable for more than one hour, more than 8 hours, more than one day, or more than one week without significantly increasing the viscosity. The formulation does not solidify by drying or curing, leading to clogging of the printhead nozzles.

[Methods of making a solvent-free or Solvent-less formulation]

(1) A method of making a solvent-free nanocomposite formulation comprising a direct dispersion (directly dispersing nanocrystals in a media), method wherein capped zirconia nanocrystals are separated from a solvent and dried under vacuum until the solvent content is less than 5% to form dry nanocrystals; mixing dry nanocrystals of at least partially capped zirconium oxide nanocrystals in at least one monomer, oligomer, polymer or mixtures thereof by soaking, stirring, speed mixing, microfluidizing or other mixing methods. Method (1) further comprising filtering said mixture to remove aggregates or other contaminants.

(2) Another method of making a solvent free formulation comprising mixing dry powder of at least partially capped zirconium oxide nanocrystals in at least one solvent by soaking, stirring, speed mixing, microfluidizing or other mixing methods to provide a nanocrystal solvent dispersion; mixing said dispersion with at least one monomer, oligomer, polymer or mixtures or monomers, oligomers and/or polymers to provide a solvent containing formulation; removing said solvent by evaporation or other solvent removal methods such as rotovap. Method (2) further comprising filtering said solvent containing or solvent free formulation to remove aggregates or other contaminants.

[Nanocomposite properties]

The nanocomposite may comprise a film, coating, layer, lens, or free-standing substrate. The present disclosure provides a nanocomposite comprising a mixture of an organic polymerizable matrix, a curing agent, and capped zirconia nanocrystals wherein said capped nanocrystals are present in the nanocomposite in the amount of 20-80% by mass of the nanocomposite. A more refined loading for inkjet-printable formulations is 30-70% by mass and is highly dependent on the selection of monomers, oligomers, polymers and solvent, if any.

The capping agent of capped zirconia nanocrystals in the presently disclosed nanocomposite may include organosilanes, organocarboxylic acids and/or organoalcohols. Examples of organosilanes of the present disclosure include, but are not limited to, methyltrimethoxysilane, n-propyltrimethoxysilane, n propyltriethoxysilane, n-octyltrimethoxysilane, n-octyltriethoxysilane, phenytrimethoxysilane, dodecyltrimethoxysilane, m-ethylphenethyltrimethoxysilane, p-ethylphenethyl trimethoxysilane, 2-[methoxy(polyethyleneoxy)propyl]-trimethoxysilane, methoxy(triethyleneoxy)propyltrimethoxysilane, 3-aminopropyltrimethoxysilane, 3-mercaptopropyltrimethoxysilane, 3-(methacryloyloxy)propyl trimethoxysilane, 3-(acryloyloxy)propyl trimethoxysilane, 3-isocyanatopropyltriethoxysilane, 3-isocyanatopropyltrimethoxysilane, glycidoxypropyltrimethoxysilane, vinyltrimethoxysilane, allyltrimethoxysilane, 1-hexenyltrimethoxysilane, 1-octenyltrimethoxysilane or any combination thereof. Examples of organoalcohols of the present disclosure include, but are not limited to, heptanol, hexanol, octanol, benzyl alcohol, phenol, ethanol, propanol, butanol, oleylalcohol, dodecylalcohol, octadecanol and triethylene glycol monomethyl ether or any combination thereof. Examples of organocarboxylic acids of the present disclosure include, but are not limited to, octanoic acid, acetic acid, propionic acid, 2-[2-(2-methoxyethoxy)ethoxy] acetic acid, oleic acid, benzoic acid, stearic acid, trifluoroacetic acid, biphenyl-4-carboxylic acid, 2-(2-methoxyethoxy) acetic acid, methacrylic acid, mono-2-(methacryloyloxy)ethyl succinate, or any combination thereof.

The inorganic solid content of the presently disclosed nanocomposite coating or film may be analyzed using a TA instrument Q500 thermal gravimetric analyzer (TGA). The procedure is the same as described previously. The percent at 700 °C relative to the initial mass is regarded as inorganic portion of the formulation, i.e. solid content.

The inorganic solid content of the presently disclosed nanocomposite coating may be 0-10% by mass, or 10-20% by mass, 20-30% by mass, 30-40% by mass, 40-50% by mass, 50-60% by mass, 60-70% by mass, 70-80% by mass, 80-90% by mass, or 90-93% by mass as measured by TGA.

The monomer units of the polymer matrix of the presently disclosed nanocomposite coating or film may include (meth)acrylic compounds having following general chemical structure.

[Chem. 12]

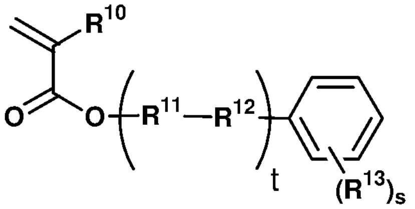

**(a-2)**

In the formula (a-2), $R^{10}$ represents a hydrogen atom or a methyl group; $R^{11}$ represents an alkylene group

having 1-3 carbon atoms; $R^{12}$ represents a single bond, an oxygen atom, or a sulfur atom; $R^{13}$ represents an alkyl group having 1-4 carbon atoms, a phenyl group, an alkoxy group having 1-4 carbon atoms, or a phenoxy group; s represents an integer of 0-5; t represents 0, 1, or 2.

The monomer units of the polymer matrix of the presently disclosed nanocomposite coating or film may include benzyl methacrylate (BMA), benzyl acrylate (BA), trimethylolpropane triacrylate (TMPTA), trimethylolpropane trimethacrylate (TMPTMA), trimethylolpropane ethoxylate triacrylate (EOTMPTA), trimethylolpropane ethoxylate trimethacrylate (EOTMPTMA), 1,6-hexanediol diacrylate (HDDA), 1,6-hexanediol dimethacrylate (HDDMA), di(ethyleneglycol) diacrylate (DEGDA), di(ethyleneglycol) dimethacrylate (DEGDMA), ethylene glycol diacrylate, glycerol 1,3-diglycerolate diacrylate, tri(propylene glycol) diacrylate, 1,6-hexanediol ethoxylate diacrylate, ethylene glycol phenyl ether acrylate (PEA), ethylene glycol phenyl ether methacrylate (PEMA), 2-hydroxy-3-phenoxypropyl acrylate (HPPA), 2-hydroxy-3-phenoxypropyl methacrylate (HPPMA), 2-phenoxy benzyl acrylate (PBA), biphenyl methacrylate (BPMA), 2- phenylphenol methacrylate (PPMA), isobutyl acrylate (IBA), 2-pdhenylethyl acrylate (2-PEA), 2-(phenylthio)ethyl acrylate or any combination thereof.

The monomer units of the polymer matrix of the presently disclosed nanocomposite coating or film may include sulfur-containing functional monomers having following general chemical formula.

[Chem. 13]

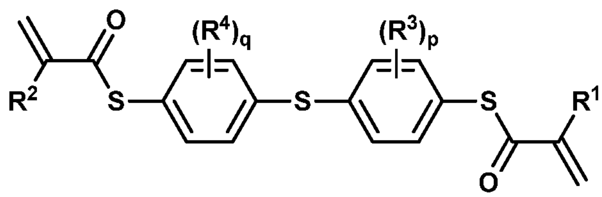

(a-1)

In the general formula (a-1), $R^1$ and $R^2$ each independently represent a hydrogen atom or a methyl group; $R^3$ and $R^4$ each independently represent an alkyl group having 1-5 carbon atoms; p and q each independently represent 0 or 1. One example is bis(4-methacryloylthiophenyl)sulfide (BMTPS). Other sulfur-containing functional monomer having other structure may include trimethylolpropane tri(3-mercaptopropionate (TMPMP), pentaerythritol tetra(3-mercaptopropionate) (PETMP), ethylene glycol dimercaptopropionate, ethylene glycol dimercaptoacetate, thiodiethanethiol, bis(mercaptoethyl)ether, 2,2'-(ethylenedioxy)diethanethiol, and combinations thereof.

The presently disclosed nanocomposite may possess a refractive index of 1.54-1.56, 1.56-1.58, 1.58-1.60, 1.60-1.62, 1.62-1.64, 1.64-1.66, 1.66-1.68, 1.68-1.70, 1.70-1.72, 1.72-1.74, or 1.74-1.76.

The presently disclosed nanocomposite may additionally demonstrate pencil hardness 2H or higher, 3H or higher, 4H or higher, 5H or higher, or 6H or higher.

The presently disclosed nanocomposite may possess high optical (400-800 nm) transmittance of 99.9%-99%, or 99%-98%, or 98%-97%, or 97%-96%, or 96%-95%, or 95%-90%, or 90%-85%, or 85%-80%, or 80%-75%, or 75%-70%, or 70%-65%, or 65%-60%, or 60%-55%, or 55%-50%, or 50%-45%, or 45%-40%, or 35%-30%, or 30%-25%, or 25%-20%, or 20%-15%, or 15%-10% for films that are less than 20 $\mu$m thick.

The transmittance of a film according to the present disclosure may be normal transmittance measured with a Perkin-Elmer UV-Vis Lambda 850 spectrophotometer, wherein the nanocomposite is coated on an optically transparent substrate, such as a fused silica substrate or a glass substrate, and a blank substrate of the same type and thickness is used as a reference.

The presently disclosed nanocomposite may additionally demonstrate thermal stability at temperatures above 120 °C, or above 175 °C, or above 200 °C, or above 250 °C, or above 260 °C, or above 300 °C. The thermal stability may be measured by subjecting the nanocomposite at designated temperature in air, nitrogen, or under vacuum for 5 minutes or longer, or 10 minutes or longer, or 30 minutes or longer, or 60 minutes or longer, or 120 minutes or longer, without visually observable coloration, cracking, or delamination and less than 10% decrease in transmittance, or less than 20% decrease in transmittance, or less than 30% decrease in transmittance, or less than 40% decrease in transmittance, or less than 50% decrease in transmittance at 400nm.

[Method of making a nanocomposite]

The present disclosure provides a method of making a nanocomposite using the presently disclosed formulation. A nanocomposite film is described herein containing a cured or partially cured formulation of the present disclosure. Said nanocomposite may be cured or partially cured by UC or thermal curing techniques known to one of ordinary skill in the art.

The present disclosure provides a nanocomposite film as described herein wherein the film is produced by spin coating, slot-die coating, screen-printing, ink-jet printing, dip coating, draw-bar coating, roll-to-roll printing, spray coating, or any combination thereof.

[Device]

The present disclosure provides an LED, organic LED, touch screen, display, sensor, Augmented Reality, Virtual Reality, or a solar cell device comprising an active component, said active component comprising a nanocomposite of the present disclosure.

[$ZrO_2$ nanocrystal capping]

$ZrO_2$ nanocrystals were synthesized via a solvothermal process similar to a process described in patent number, US 8592511 B2. Synthesized $ZrO_2$ nanocrystals were transferred to a flask. A solvent such as PGMEA or toluene was added at a 0.1:1-1:1, 1:1-1.25:1, 1.25:1-1.5:1, 1.5:1-1.75:1, 1.75:1-2:1, 2:1-2.25:1, 2.25:1-2.5:1, 2.5:1-2.75:1, 2.75:1-3:1, 3:1-4:1, 4:1-5:1, 5:1-6:1, 6:1-7:1, 7:1-8:1, 8:1-9:1, 9:1-10:1 solvent to nanocrystals. A primary capping agent was then added to the reaction flask at 0.1-5%, 5-10%, 10-15%, 15-20%, 20-25%, 25%-30%, 30%-35% of capping agent to wet cake by mass. This mixture was then heated by a first heating process to 50-60 °C, 60-70 °C, 70-80 °C, 80-90 °C, 90-100 °C, 100-110 °C, 110-120 °C, 120-130 °C for 1-10 minutes, 10-20 minutes, 20-30 minutes, 30-40 minutes, 40-50 minutes, 50-60 minutes, 60-70 minutes, 70-80 minutes, 80-90 minutes, 90-100 minutes, 100-120 minutes.

Optionally a secondary capping agent was added to the reaction flask before or after the first heating process. The secondary capping agent was also added to the reaction flask at 0.1%-5%, 5%- 10%, 10%-15%, 15%-20%, 20%-25%, 25%-30%, 30%-35%, 35%-40%, 40%-45%, 45%-50%, 50%-55%, 55%-60%, 60%- 70%, 70%-80%, 80%-90%, 90%-100% of capping agent to wet cake by mass.

This mixture was then heated to 50-60 °C, 60-70 °C, 70-80 °C, 80-90 °C, 90-100 °C, 100-110 °C, 110-120 °C, 120-130 °C for 1-10 minutes, 10-20 minutes, 20-30 minutes, 30-40 minutes, 40-50 minutes, 50-60 minutes, 60-70 minutes, 70-80 minutes, 90-100 minutes, 100-120 minutes.

Optionally water was then added to the reaction mixture after cooling the reaction mixture to 80 °C at 0.1-5%, 5-10%, 10-15%, 15-20%, 20-25%, 25-30%, 30-35% of water to wet cake by mass. This mixture was heated at 80-90 °C, 90-100 °C, 100-110 °C, 110-120 °C, 120-130 °C for an additional 1-10 minutes, 10-20 minutes, 20-30 minutes, 30-40 minutes, 40-50 minutes, 50-60 minutes, 60-70 minutes, 70-80 minutes, 80-90 minutes, 90-100 minutes, 100-120 minutes. The reaction mixture was then cooled to room temperature to provide capped nanocrystals. The capped nanocrystals can then be filtered through a 0.45 $\mu$m and then a 0.2 $\mu$m PTFE filter or optionally go through the following washing process.

The surface of $ZrO_2$ nanocrystals of the present disclosure are optionally capped with at least one capping agent including, but not limited to, methyltrimethoxysilane, n-propyltrimethoxysilane, n-propyltriethoxysilane, n-octyltrimethoxysilane, n-octyltriethoxysilane, phenyltrimethoxysilane, dodecyltrimethoxysilane, m-ethylphenethyltrimethoxysilane, p-ethylphenthyltrimethoxysilane, 2-[methoxy(polyethyleneoxy)propyl] trimethoxysilane, methoxy(triethyleneoxy)propyltrimethoxyxilane, 3-aminopropyltrimethoxysilane, 3-mercaptopropyltrimethoxysilane, 3-(methacryloyloxy)propyltrimethoxysilane, 3-(acryloyloxy)propyltrimethoxysilane, 3-isocyanatopropyltriethoxysilane, 3-isocyanatopropyltrimethoxysilane, glycidoxypropyltrimethoxysilane, vinyltrimethoxysilane, allyltrimethoxysilane, 1-hexenyltrimethoxysilane, 1-octenyltrimethoxysilane, heptanol, hexanol, octanol, benzyl alcohol, phenol, ethanol, propanol, butanol, oleylalcohol, dodecylalcohol, octadeanol, triethylene glycol monomethyl ether, octanoic acid, acetic acid, propionic acid, 2-[2-(2-methoxyethoxy)ethoxy]acetic acid, oleic acid, benzoic acid, stearic acid, trifluoroacetic acid, biphenyl-4-carboxylic acid, 2-(2-methoxyethoxy)acetic acid, methacrylic acid, mono-2-(methacryloyloxy)ethyl succinate, or any combination thereof.

The reaction mixture is optionally washed to remove exess capping agent ant other byproducts. The reaction mixture is precipitated by adding an anti-solvent such as heptane for a PGMEA solution or acetone for a toluene solution in a 0.1:1-1:1, 1:1-1.25:1, 1.25:1-1.5:1, 1.5:1-1.75:1, 1.75:1-2:1, 2:1-2.25:1, 2.25:1-2.5:1, 2.5:1-2.75:1, 2.75:1-3:1 anti-solvent to reaction mixture ratio mass-to-mass. This precipitate was centrifuged at 100-500 rpm, 500-1000 rpm, 100-1500 rpm, 1500-2000 rpm, 2000- 2500 rpm, 2500-3000 rpm, 3000-3500 pm, 3500-4000 rpm, 4000-4500 rpm, 4500-5000 rpm, 5000-5500 rpm, 5500-6000 rpm, 6000- 6500 rpm, 6500-7000 rpm, 7000-7500 rpm, 7500-8000 rpm, 8000-8500 rpm, 8500-9000 rpm for 0-5 minutes, 5-10 minutes, 10-15 minutes, 15-20 minutes, 30-25 minutes, 25-30 minutes, 30-35 minutes, 35-40 minutes, 40-45 minutes, 45-50 minutes, 50-55 minutes, 55-60 minutes. The resulting supernatant was decanted and discarded. The solids were then dispersed in a solvent, such as toluene for non-polar capped $ZrO_2$ or THF for polar capped $ZrO_2$. The dispersed solids were then precipitated in an anti-solvent again, such as heptane for a THF solution or acetone for a toluene solution in a 0.1:1-1:1, 1:1-1.25:1, 1.25:1-1.5:1, 1.5:1-1.75:1, 1.75:1-2:1, 2:1-2.25:1, 2.25:1-2.5:1, 2.5:1-2.75:1, 2.75:1-3:1 anti-solvent to reaction mixture ratio mass-to-mass. This precipitate was centrifuged at 100-500 rpm, 500-1000 rpm, 100-1500 rpm, 1500- 2000 rpm, 2000-2500 rpm, 2500-3000 rpm, 3000-3500 rpm,

3500-4000 rpm, 4000-4500 rpm, 4500-5000 rpm, 5000-5500 rpm, 5500-6000 rpm, 6000-6500 rpm, 6500-7000 rpm, 7000-7500 rpm, 7500-8000 rpm, 8000-8500 rpm, 8500-9000 rpm for 0-5 minutes, 5-10 minutes, 10-15 minutes, 15-20 minutes, 30-25 minutes, 25-30 minutes, 30-35 minutes, 35-40 minutes, 40-45 minutes, 45-50 minutes, 50-55 minutes, 55-60 minutes. The resulting supernatant was decanted and discarded. This process is repeated if necessary. The solids were then placed in a vacuum oven to dry overnight.

The dried solids (capped nanocrystals) were then optionally re-dispersed in a 1:1 ratio of solids to solvent in PGMEA to create a 50% by mass loaded dispersion. The resulting dispersion was filtered through a 0.45 μm and then a 0.2μm PTFE filter.

[Example of capped $ZrO_2$ nanocrystals]

As-synthesized $ZrO_2$ nanocrystals, referred subsequently as "wet cake," was transferred to a round bottom flask. PGMEA was then added by mass at a 0.370:1 solvent to wet-cake ratio.

Following this step,

ethoxy(triethyleneoxy)propyltrimethoxysilane was added to the reaction flask at 10% by mass of the wet cake. 3-(Acryloyloxy)propyltrimethoxysilane was then added to the reaction flask at 2% by mass of the wet cake. This mixture was heated to 120 °C for 90 minutes with stirring to form the capped nanocrystals. Finally, the reaction mixture was cooled to room temperature.

The reaction mixture was then washed to remove excess capping agents and impurities. The reaction mixture was then precipitated with heptane as the anti-solvent using a 7:1 heptane to reaction mixture ratio mass-to-mass. This precipitate was centrifuged at 4500 rpm for 10 minutes. The resulting supernatant was decanted and discarded. The solids were then dispersed in THF using a 3:1 THF to solid ratio mass-to-mass. The dispersed solids were then precipitated in an anti-solvent again such as heptane in a 3:1 heptane to reaction mixture ratio mass-to-mass. This precipitate was centrifuged at 4500 rpm for 10 minutes. The resulting supernatant was decanted and discarded. The solids were then dispersed in THF using a 3:1 THF to solid ratio mass-to-mass. The dispersed solids were then precipitated a third time in an anti-solvent again such as heptane in a 3:1 heptane to reaction mixture ratio mass-to-mass. This precipitate was centrifuged at 4500 rpm for 10 minutes. The resulting supernatant was decanted and discarded. The solids were then placed in a vacuum oven to dry overnight.

The dried solids were redispersed into a solvent or a monomer and optionally filtered through a 0.45 μm and then a 0.2 μm PTFE filter.

Hereinafter, other embodiments are specifically described by way of Reference Examples.

[Reference Examples]

In the Reference Examples below, the capped $ZrO_2$ nanocrystals described above were employed. One of ordinary skill in the art would recognize that $ZrO_2$ nanocrystals with different capping agents could also be used.

The capped $ZrO_2$ nanocrystals as described above in "Example of capped $ZrO_2$ nanocrystals" were dispersed via direct dispersion (See Section 1 of methods of making a solvent-free or solvent-less formulation) into desired monomers, such as BA or PEA and diluted with crosslinkers, such as TMPTA, HDDA and TMPMP to desired loadings of zirconia in the formulation, BA % by mass ranging from 35% by mass-70% by mass, PEA % by mass ranging from 20% by mass-40% by mass, TMPTA % by mass ranging from 2%-5% by mass, TMPMP % by mass ranging from 3% by mass-5% by mass, HDDA % by mass ranging from 1% by mass- 3% by mass, and BYK 378 % by mass ranging from 0.5% by mass-1.0% by mass.

Representative formulations of Reference Example 1 are labeled Formulations A1 through A10 according to Table 2 below.

[Table 2]

| Formulation | $ZrO_2$ (wt%) | PEA (wt%) | BA (wt%) | TMPTA (wt%) | HDDA (wt%) | TMPMP (wt%) | Viscosity (cP) |
|---|---|---|---|---|---|---|---|
| A1 | 50.00 | 40.00 | 0.00 | 5.00 | 0.00 | 5.00 | 62.7 |
| A2 | 50.00 | 36.00 | 4.00 | 5.00 | 0.00 | 5.00 | 47.4 |
| A3 | 50.00 | 28.00 | 12.00 | 5.00 | 0.00 | 5.00 | 34.7 |
| A4 | 50.00 | 20.00 | 20.00 | 5.00 | 0.00 | 5.00 | 26.0 |
| A5 | 50.00 | 20.00 | 20.00 | 3.75 | 1.25 | 5.00 | 25.0 |
| A6 | 50.00 | 20.00 | 20.00 | 2.50 | 2.50 | 5.00 | 23.6 |

(continued)

| Formulation | $ZrO_2$ (wt%) | PEA (wt%) | BA (wt%) | TMPTA (wt%) | HDDA (wt%) | TMPMP (wt%) | Viscosity (cP) |
|---|---|---|---|---|---|---|---|
| A7 | 50.00 | 21.25 | 21.25 | 3.75 | 0.00 | 3.75 | 23.4 |
| A8 | 45.00 | 23.40 | 23.40 | 4.10 | 0.00 | 4.10 | 16.9 |
| A9 | 40.00 | 25.50 | 25.50 | 4.50 | 0.00 | 4.50 | 13.8 |
| A10 | 35.00 | 27.60 | 27.60 | 4.90 | 0.00 | 4.90 | 11.5 |

[Reference Example 1A]

A photopolymerization initiator (Irgacure (Registered Trademark) 819 photopolymerization initiator) was added in an amount of 4% by mass relative to monomer content to the Formulation A10 having 35% by mass of the capped $ZrO_2$ nanocrystals in a blend of acrylates consisting of 27.6% by mass BA, 27.6% by mass PEA, 4.9% by mass TMPTA and 4.9% by mass TMPMP exhibiting a viscosity of 11.5 cP. Formulation A10 with the added photopolymerization initiator was then deposited as a film having a thickness of 10 $\mu$m onto a glass substrate. The film was cured under 385 nm UV light at 1 J/cm$^2$ and resulted in a cured film having a refractive index of 1.58 at 550 nm.

[Reference Example 2]

The capped nanocrystals of $ZrO_2$ used in Example 1 were dispersed into benzyl acrylate (BA) monomer in the same manner previously described to achieve several mass ratios of nanocrystal loadings (NC % by mass) to form nanocomposites. A siloxane surfactant (BYK 378 commercially available from BYK Chemie, GMBH) was added in an amount of 1.0% by mass to form the other nanocomposite. The capped nanocrystal % by mass ranged from 35% by mass-70% by mass, with BA % by mass ranging from 35% by mass-70% by mass, and BYK 378 % by mass ranging from 0.5% by mass-1.0% by mass with respect to total formulation. Nanocomposites B1 and B2 comprise 50% by mass (23.3 vol%) nanocrystals in BA without and with 1% by mass BYK 378 surfactant, respectively.

Figure 1 shows the behavior of the uncured Formulation B1 viscosity at 25 °C in relation to the mass ratio of zirconia nanoparticles.

Figure 2 represents the cured B1 film refractive index at 550 nm (calculated from measurements made at 448 nm and 635 nm) versus the volume ratio of zirconia nanoparticles for a formulation depicted in this Reference Example. Viscosity versus temperature behavior is an important relationship for certain inkjet printhead.

Figure 3 displays the viscosity-temperature relationship for uncured formulations of Nanocomposites B1 and B2 with two other nanocomposites described in Example 3 for comparison.

[Reference Example 3]

The capped nanocrystals of $ZrO_2$ used in Reference Example 1 were dispersed into the desired monomer blends, such as BA, NVP and PBA with surfactant, such as BYK 378, to desired loadings of zirconia in the formulation ranging from 50% by mass-70% by mass. Preferred capped nanocrystal content can range from 35% by mass-70% by mass, BA % by mass can range 15% by mass-30% by mass, NVP % by mass can range from 5% by mass-20% by mass, PBA % by mass can range from 5% by mass-15% by mass, and BYK 378 % by mass can range from 0.5% by mass-1.0% by mass with respect to total formulation. The combination of PBA and BYK 378 will result in little to no nozzle plate wetting for specific inkjet printheads, e.g. Dimatix DMC and KM1024i HE series. Figure 4 demonstrates three pictures as examples of nozzle plate wetting ranging from severe wetting (top) to moderate (middle) to none (bottom).

[Reference Example 3A]

A specific example is a formulation with 40% by mass capped nanocrystals in a blend of acrylates consisting of 30.0% by mass BA, 30.0% by mass PBA, BYK 378 (Nanocomposite C1 - without BYK 378; Nanocomposite C2 - with 1.0% by mass BYK 378 with respect to total formulation). Nanocomposite C2 has a 14.2 cP viscosity at 25 °C and 22.0 dyne/cm surface tension. Irgacure 819 photo polymerization initiator is added at 4% by mass with respect to the monomer content to the C2 formulation, and it is deposited as a film. 10 $\mu$m films were coated of each formulation on a glass substrate is cured under 385 nm UV at 1 J/cm$^2$ and has a refractive index of 1.64 at 550 nm. The resulting films are Nanocomposites C1 and C2. The viscosity versus temperature relationship for the formulations of Nanocomposites C1 and C2 are shown in Figure 3.

[Reference Example 3B]

Another example is a formulation with 45% by mass capped nanocrystals in a blend of acrylates consisting of 27.5% by mass BA, 16.5% by mass NVP, 11.0% by mass PBA, BYK 378 (Nanocomposite D1 - without BYK 378; Nanocomposite D2 - with 1.0 wt% BYK 378 with respect to total formulation). The Nanocomposite D2 has a 10.1 cP viscosity at 25 °C and 22.0 dyne/cm surface tension.

A TGA scan is used to characterize the percent solids in the formulations and is described above. Another characterization tool utilizes above-described UV-Vis spectra to determine the optical density of the uncured formulations.

Figures 5 and 6 show graphs of a TGA scan and the optical density versus wavelength curve of the Nanocomposite D2, respectively.

Irgacure 819 photo polymerization initiator is added at 4% by mass with respect to the monomer content to the Nanocomposite D2, and it is deposited as a film. The 10 μm film coated on a glass substrate is cured under 385 nm UV at 1 $J/cm^2$ and has a refractive index of 1.64 at 550 nm.

Another example is a formulation with 50% by mass capped nanocrystals in a blend of acrylates consisting of 25.0% by mass BA, 15.0% by mass NVP, 10.0% by mass PBA, and 1.0% by mass BYK 378 is added to this mixture to form Nanocomposite D3. Nanocomposite D3 has a 14.2 cP viscosity at 25 °C and 22.0 dyne/cm surface tension. Irgacure 819 photo polymerization initiator is added at 4% by mass with respect to the monomer content to the formulation, and it is deposited as a film. The 10 μm film of each formulation coated on a glass substrate is cured under 385 nm UV at 1 $J/cm^2$ and has a refractive index of 1.651 at 550 nm.

Typical optical properties of cured nanocomposite films are the transmission and refractive index over the visible range of wavelengths. Figures 7 and 8 are the refractive index vs wavelength and %T versus wavelength curves for 10 μm thick Nanocomposite D3 film. Table 3 gives the compositions, formulation viscosity, nanocomposite film RI and nozzle wetting behavior of various formulations including Nanocomposites D2 and D3.

[Table 3]

| Nanocomposite* | $ZrO_2$ (wt%) | BA (wt%) | NVP (wt%) | PBA (wt%) | BPMA (wt%) | Formulation viscosity (cP) | RI (550 nm) | Observed nozzle plate wetting |
|---|---|---|---|---|---|---|---|---|
| D2 | 45.0 | 27.5 | 16.5 | 11.0 | 0.0 | 10.1 | 1.640 | No |
| D3 | 50.0 | 25.0 | 15.0 | 10.0 | 0.0 | 14.3 | 1.651 | No |
| D4 | 55.0 | 22.5 | 13.5 | 9.0 | 0.0 | 19.5 | 1.661 | No |
| D5 | 60.0 | 20.0 | 12.0 | 8.0 | 0.0 | 31.5 | 1.670 | No |
| E1 | 40.0 | 0.0 | 30.0 | 0.0 | 30.0 | 19.5 | 1.645 | Yes |
| E2 | 45.0 | 0.0 | 27.5 | 27.5 | 0.0 | 19.5 | 1.635 | No |
| E3 | 40.0 | 0.0 | 30.0 | 6.0 | 24.0 | 17.3 | 1.642 | Yes |
| E4 | 40.0 | 30.0 | 0.0 | 24.0 | 6.0 | 15.1 | 1.624 | No |
| E5 | 40.0 | 0.0 | 30.0 | 18.0 | 12.0 | 17.0 | 1.637 | Yes |
| E6 | 40.0 | 18.0 | 12.0 | 18.0 | 12.0 | 17.6 | 1.643 | No |
| *All nanocomposites have 1% by mass BYK 378 relative to the total formulation. | | | | | | | | |

[Reference Example 4]

The capped nanocrystals of $ZrO_2$ used in Reference Example 1 were dispersed into the desired monomer blends, such as BA, NVP, PBA and BPMA with surfactant such as BYK 378, in the same manner previously described to desired loadings of zirconia in the formulation ranging from 50 % by mass - 70 % by mass. Preferred capped nanocrystals % by mass can range from 35% by mass-70% by mass, BA % by mass can range from 15% by mass-30% by mass, NVP % by mass can range from 5% by mass-20% by mass, PBA % by mass can range from 5% by mass-20% by mass, BPMA % by mass can range from 10% by mass-30% by mass, and BYK 378 % by mass can range from 0.5% by mass -1.0% by mass. Table 3 includes compositions, viscosities, refractive indexes (RI) of cured films and observations of nozzle plate wetting for Nanocomposites E1 through E6 from this reference example.

[Reference Example 4A]

A specific example is Nanocomposite E6 which is a formulation with 40% by mass capped nanocrystals in a blend of acrylates consisting of 18.0% by mass BA, 12.0% by mass NVP, 18.0% by mass PBA, 12.0% by mass BPMA and 1.0% by mass BYK 378 and has a 17.6 cP viscosity at 25 °C and 22.0 dyne/cm surface tension. Irgacure 819 photo polymerization initiator is added at 4% by mass with respect to the monomer content to the formulation, and it is deposited as a 10 μm film on a glass substrate. The film is cured under 385 nm UV at 1 J/cm$^2$ and has a refractive index of 1.643 at 550 nm.

[Reference Example 5]

The capped $ZrO_2$ nanocrystals used in Reference Example 1 were dispersed, in the same manner previously described into desired monomer blends such as BA, NVP, PBA and BPMA with surfactant such as BYK 378 to desired loadings of zirconia in the formulation with added solvent such as PGMEA, for viscosity reduction. Preferred small additions of PGMEA are from 1% by mass-10% by mass of the total formulation to provide solvent-free and solvent-less formulations as described in this invention.

[Reference Example 5A]

Two specific examples are Nanocomposites F1 with 80% by mass capped nanocrystals in 20% by mass PEA which has an initial viscosity of 5,755 cP at 25 °C, and Nanocomposite F2 with 75% by mass capped nanocrystals in 25% by mass BA which has an initial viscosity of 140.6 cP at 25 °C. Figure 9 displays the viscosity decrease with the addition of PGMEA with respect to the total formulation to Nanocomposites F1 and F2.

[Reference Example 6]

The capped $ZrO_2$ nanocrystals used in Reference Example 1 were dispersed in the same manner previously described into desired monomer blends, such as BA, NVP, PBA and BPMA with surfactant such as BYK 378 to desired loadings of zirconia in the formulation and the addition of organic dopants such as phenanthrene (PhA).

Preferred capped nanocrystal % by mass can range from 35% by mass-70% by mass, BA % by mass can range from 15% by mass-30% by mass, NVP % by mass can range from 5% by mass-20% by mass, PBA % by mass can range from 5% by mass-15% by mass, BPMA % by mass can range from 10% by mass-30% by mass, PhA % by mass can range from 10% by mass-20% by mass with respect to monomer content, and BYK 378 % by mass can range from 0.5% by mass-1.0% by mass with respect to total formulation. Table 4 shows compositions, formulation viscosities and refractive indexes (RI) of nanocomposite films for various materials with and without PhA additions. Table 4 shows Nanocomposites D3, D4, D5, G1 and G2.

[Reference Example 6A]

A specific example, Nanocomposite G1, is a formulation with 50% by mass capped nanocrystals in a blend of acrylates consisting of 20.3% by mass BA, 12.2% by mass NVP, 8.2% by mass PBA, and 9.3% by mass PhA and has an 18.1 cP viscosity at 25 °C.

Irgacure 819 photo polymerization initiator is added at 4% by mass with respect to the monomer content to the formulation, and it is deposited as a 10 μm film on a glass substrate. The film is cured under 385 nm UV at 1 J/cm$^2$ and has a refractive index of 1.668 at 550 nm.

Another example, Nanocomposite G2, is a formulation with 59.7 w% by mass capped nanocrystals in a blend of acrylates consisting of 16.6% by mass BA, 10.0% by mass NVP, 7.0 % by mass PBA, and 6.6% by mass PhA and has a 42.2 cP viscosity at 25 °C.

Irgacure 819 photo polymerization initiator is added at 4% by mass with respect to the monomer content to the formulation, and it is deposited as a film. The film is cured under 385 nm UV at 1 J/cm$^2$ and has a refractive index of 1.683 at 550 nm.

[Table 4]

| Nanocomposite* | $ZrO_2$ (wt%) | BA (wt%) | NVP (wt%) | PBA (wt%) | PhA (wt%) | Viscosity (cP) | RI (550 nm) |
|---|---|---|---|---|---|---|---|
| D3 | 50.0 | 25.0 | 15.0 | 10.0 | 0.0 | 14.3 | 1.651 |
| G1 | 50.0 | 20.3 | 12.2 | 8.2 | 9.3 | 18.1 | 1.668 |

(continued)

| Nanocomposite* | $ZrO_2$ (wt%) | BA (wt%) | NVP (wt%) | PBA (wt%) | PhA (wt%) | Viscosity (cP) | RI (550 nm) |
|---|---|---|---|---|---|---|---|
| D4 | 55.0 | 22.5 | 13.5 | 9.0 | 0.0 | 19.5 | 1.661 |
| D5 | 60.0 | 20.0 | 12.0 | 8.0 | 0.0 | 31.5 | 1.670 |
| G2 | 59.7 | 16.6 | 10.0 | 7.0 | 6.6 | 42.2 | 1.683 |
| *All nanocomposites have 1% by mass BYK 378 relative to the total formulation. | | | | | | | |

[Reference Example 7]

The capped $ZrO_2$ nanocrystals used in Reference Example 1 were dispersed in the same manner previously described into desired monomer blends, such as BA, NVP, PBA, STY, and/or 4-methylstyrene (4MS), divinylbenzene (DVB) and 4-vinylanisole (4VA) and the addition of organic dopants, such as 9-vinylcarbazole (NVCb) to form nanocomposites H1-H5. Optionally surfactants, such as BYK 333, and dispersants, such as FLOWLEN G-700 were added to improve inkjet performance.

With respect to total formulation, preferred capped nanocrystal % by mass can range from 35% by mass-70% by mass, BA % by mass can range from 15% by mass-30% by mass, NVP % by mass can range from 5% by mass-20% by mass, PBA % by mass can range from 5% by mass- 15% by mass, STY % by mass can range from 10% by mass-20% by mass, DVB % by mass can range from 10% by mass-20% by mass, 2-PEA % by mass can range from 2% by mass-30 % by mass, and with respect to monomer content, NVCb % by mass can range from 5% by mass-35% by mass with respect to monomer content, BYK 333 % by mass can range from 0.01% by mass-1.0% by mass, and FLOWLen G 700 dispersant % by mass can range from 0.01% by mass-1.0% by mass. Tables 5 and 6 show compositions, formulation viscosities and refractive indexes of nanocomposite for various formulations with and without STY, 4MS, DVB, 4VA, 2-PEA and NVCb additions.

[Table 5]

| Nanocomposite* | $ZrO_2$ | BA | NVP | PBA | STY | 4MS | DVB | 4VA | NVCb | Viscosity ($_C$P) | RI (550nm) |
|---|---|---|---|---|---|---|---|---|---|---|---|
| | (% by mass) | | | | | | | | | | |
| H1 | 47.5 | 13.0 | 7.9 | 5.2 | 4.8 | 0.0 | 0.0 | 0.0 | 16.6 | 21.3 | 1.690 |
| H2 | 47.5 | 13.0 | 7.9 | 5.2 | 0.0 | 4.8 | 0.0 | 0.0 | 16.6 | 18.2 | 1.692 |
| H3 | 47.5 | 13.0 | 7.9 | 5.2 | 2.4 | 2.4 | 0.0 | 0.0 | 16.6 | 17.2 | 1.694 |
| H4 | 47.5 | 13.0 | 7.9 | 5.2 | 2.4 | 0.0 | 2.4 | 0.0 | 16.6 | 20.3 | 1.699 |
| H5 | 47.5 | 13.0 | 7.9 | 5.2 | 2.4 | 0.0 | 0.0 | 2.4 | 16.6 | 23.2 | 1.691 |
| *All nanocomposites have 1% by mass BYK 378 relative to the total formulation. | | | | | | | | | | | |

[Reference Example 7A]

A specific example, Nanocomposite H1, is a formulation with 47.5% by mass capped nanocrystals in a blend of acrylates and vinyl monomers consisting of 13.0% by mass BA, 7.9% by mass NVP, 5.2% by mass PBA, 4.8% by mass STY and 16.0% by mass NVCb and has a 21.3 cP viscosity at 25 °C. Irgacure 819 photopolymerization initiator is added at 4% by mass with respect to the monomer content to the formulation, and it is deposited as a 10 μm film on a glass substrate. The film is cured under 385 nm UV at 1 J/cm$^2$ and has a refractive index of 1.690 at 550 nm.

Another specific example, Nanocomposite H2, is a formulation with 47.5% by mass capped nanocrystals in a blend of acrylates and vinyl monomers consisting of 13.0% by mass BA, 7.9% by mass NVP, 5.2% by mass PBA, 4.8% by mass 4MS and 16.0% by mass NVCb and has an 18.2 cP viscosity at 25 °C. Irgacure 819 photopolymerization initiator is added at 4% by mass with respect to the monomer content to the formulation, and it is deposited as a 10 μm film on a glass substrate. The film is cured under 385 nm UV at 1 J/cm$^2$ and has a refractive index of 1.692 at 550 nm.

A third example, Nanocomposite H4, is a formulation with 47.5% by mass capped nanocrystals in a blend of acrylates and vinyl monomers consisting of 13.0% by mass BA, 7.9% by mass NVP, 5.2% by mass PBA, 2.4% by mass STY, 2.4% by mass DVB and 16.0% by mass NVCb and has a 20.3 cP viscosity at 25 °C. Irgacure 819 photopolymerization initiator is added at 4% by mass with respect to the monomer content to the formulation, and it is deposited as a 10 μm film on a glass substrate. The film is cured under 385 nm UV at 1 J/cm$^2$ and has a refractive index of 1.699 at 550 nm.

[Reference Example 8]

Optionally, surfactants such as BYK 333, and dispersants such as FLOWLEN G-700 were added to improve inkjet performance. Preferred capped nanocrystals % by mass can range from 35% by mass-70 % by mass, 2-PEA % by mass can range from 2% by mass-30% by mass, PTEA % by mass can range from 10% by mass-30% by mass, BMTPS % by mass can range from 10% by mass-30% by mass, BYK 333 % by mass can range from 0.01% by mass-1.0% by mass. Table 6 shows compositions, viscosities and refractive indexes of nanocomposite for Nanocomposites I1-13.

[Table 6]

| Nanocomposite* | $ZrO_2$ | BA | NVP | PBA | DVB | 2-PEA | PTEA | NVCb | BMTPS | Viscosity (cP) | RI (550 nm) |
|---|---|---|---|---|---|---|---|---|---|---|---|
| | (% by mass) | | | | | | | | | | |
| I1 | 47.5 | 7.1 | 7.1 | 10.6 | 4.7 | 2.4 | 0.0 | 15.4 | 0.0 | 21.6 | 1.690 |
| 12 | 45.0 | 0.0 | 0.0 | 0.0 | 0.0 | 27.5 | 27.5 | 0.0 | 0.0 | 16.1 | 1.640 |
| 13 | 50.0 | | | | | 40.0 | | | 10.0 | 23.3 | 1.716 |
| *All nanocomposites have 1% by mass BYK 378 relative to the total formulation. | | | | | | | | | | | |

[Reference Example 8A]

A specific example, Nanocomposite 12, is a formulation with 45.0% by mass capped nanocrystals in a blend of acrylates consisting of 27.5% by mass PTEA, 27.5% by mass 2-PEA and has 16.1 cP viscosity at 25 °C. Irgacure 819 photo polymerization initiator is added to the formulation at 4 % by mass with respect to the monomer content, and it is deposited as a 10 μm film on a glass substrate. The film is cured under 385 nm UV at 1 $J/cm^2$ and has a refractive index of 1.640 at 550 nm and good jetting stability up to 1 hour at 25 °C.

[Reference Example 8B (Example 8B)]

Another specific example, Nanocomposite 13, is a formulation with 50.0% by mass capped Zirconia nanocrystals in a blend of acrylates consisting of 40% by mass 2-PEA and 10.0% by mass BMTPS has 23.3 cP viscosity at 25 °C. Irgacure 819 photo polymerization initiator is added to the formulation at 4% by mass with respect to the monomer content, and it is deposited as a 10 μm film on a glass substrate. The cured nanocomposite film has a refractive index of 1.716 at 550 nm.

[Abstract of the present disclosure with respect to other embodiments]

The present disclosure provides a high-refractive index acrylic formulation embedded with sub 30 nm zirconium oxide nanocrystals. The formulation is solvent-free, low-viscosity, inkjettable (among other film deposition techniques) and produces high-refractive index, high transparency nanocomposites for a variety of optical applications including OLED lighting and display applications.

Examples

Hereinafter, the present invention is described in more detail by way of Examples, but the present invention is not limited to these Examples.

[Example 1, Example 2, Comparative Example 1, and Comparative Example 2]

In Examples, a compound having following structure was used as the sulfide compound (A1).

[Chem. 14]

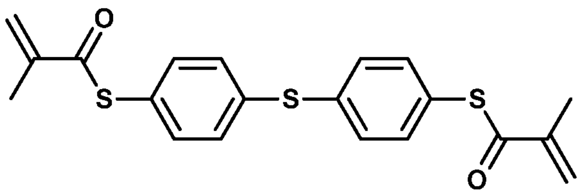

In Examples and Comparative Examples, compound A2-1 and compound A2-2 having following structures were used as the (meth)acrylate compound (A2).

[Chem. 15]

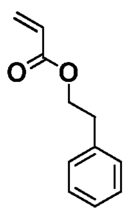

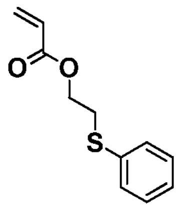

**A2-1** **A2-2**

In Comparative Examples, a compound having following structure was used as other photopolymerizable compound (A3).

[Chem. 16]

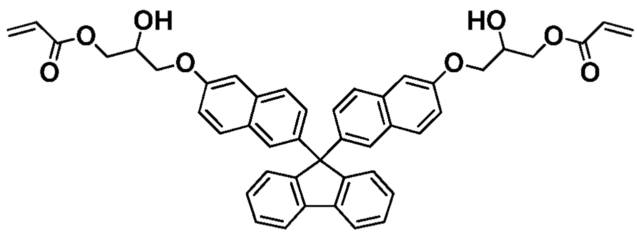

In Examples and Comparative Examples, zirconium oxide nanocrystals capped with methoxy(triethyleneoxy)propyltrimethoxysilane and 3-(acryloyloxy)propyltrimethoxysilane produced by the method of [Example of capped $ZrO_2$ nanocrystals]] were used as zirconium oxide nanocrystals that are metal compound nanocrystals (B).

In Examples and Comparative Examples, a compound having following structure was used as the photopolymerization initiator (C1).

[Chem. 17]

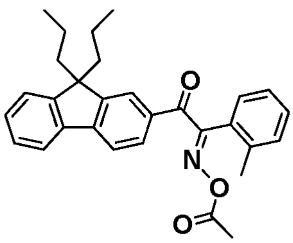

The curable ink compositions of Example 1, Example 2, Comparative Example 1 and Comparative Example

2 were obtained by uniformly mixing each of the components described above in the proportions shown in Table 7. The viscosities of obtained curable ink compositions measured at 25 °C with an E type viscometer are shown in Table 7. The refractive indexes of the cured films formed using the obtained curable ink compositions were measured according to the following method. Results of measurement of refractive index were shown in Table 7.

<Method for measuring refractive index>

The photosensitive ink compositions of each of the Examples and Comparative Examples were applied to a glass substrate using an inkjet system. The coating film was then exposed and cured using a 395 nm UV-LED exposure system with an exposure dose of 2 J/cm$^2$ to obtain a cured film of 3 $\mu$m thickness. The refractive indexes at a wavelength of 550nm of the films were measured using a Metricon prism coupler.

[Table 7]

| | | Example 1 | Example 2 | Comparative example 1 | Comparative example 2 |
|---|---|---|---|---|---|
| Polymerizable compound (A) | Sulfide compound (A1) (Parts by mass) | 14 | 10 | - | - |
| | (Meth)acrylate compound (A2) (Type/Parts by mass) | A2-1/ 39 | A2-1/ 39 | A2-1/ 34<br>A2-2/ 19 | A2-1/ 60 |
| | Other photopolymerizable compound (A3) (Parts by mass) | - | - | - | 40 |
| Metal compound nanocrystals (B) (Parts by mass) | | 45 | 49 | 45 | - |
| Photopolymerization initiator(C1) (Parts by mass) | | 2 | 2 | 2 | 2 |
| Viscosity (cP, 25°C) | | 18 | 25 | 20 | 500 |
| Refractive index of cured product | | 1.69 | 1.74 | 1.65 | 1.65 |

According to Example 1 and Example 2, when the curable ink composition includes the polymerizable compound (A) and the metal compound nanocrystals of predetermined type, and includes the sulfide compound (A1) and the (meth)acrylate compound (A2) respectively having predetermined structures in combination, it is found that the curable ink composition has a low viscosity that allows the inkjet method to be applied, and a cured product with high refractive index can be formed, even though the curable ink composition does not include the solvent (S).

According to Comparative Example 1, even if the curable ink composition includes the polymerizable compound (A) and the metal compound nanocrystals (B) of predetermined type, when the curable ink composition does not include the sulfide compound (A1) as the polymerizable compound (A), it is found that it is difficult to form a cured product with high refractive index.

According to Comparative Example 2, it can be found that it is difficult to form a cured product with a sufficiently high refractive index, and the viscosity of the resulting curable ink composition is high, even if a higher refractive index of the cured produce is attempted by using other photopolymerizable compound (A3) instead of metal compound nanocrystals (B).

## Claims

1. A curable ink composition comprising a polymerizable compound (A), metal compound nanocrystals (B), and comprising or not comprising a solvent (S),

    wherein the photopolymerizable compound (A) comprises a sulfide compound (A1) represented by following formula (a-1) and a (meth)acrylate compound represented by following formula (a-2),
    the metal compound nanocrystals (B) comprise zirconium oxide nanocrystals, and
    a viscosity measured at 25 °C using an E-type viscometer is 30 cP or less,

[Chem. 1]

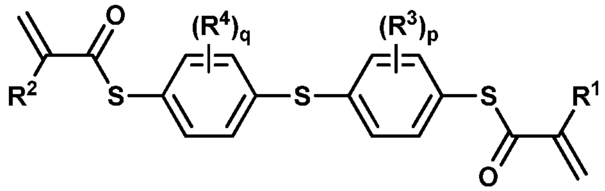

(a-1)

wherein, in the formula (a-1), $R^1$ and $R^2$ are each independently a hydrogen atom or a methyl group, $R^3$ and $R^4$ are each independently an alkyl group having 1 or more and 5 or less carbon atoms, and p and q are each independently 0 or 1, and

[Chem. 2]

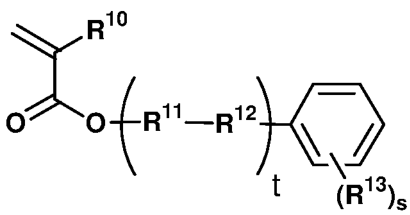

(a-2)

wherein, in the formula (a-2), $R^{10}$ is a hydrogen atom of a methyl group, $R^{11}$ is an alkylene group having 1 or more and 3 or less carbon atoms, $R^{12}$ is a single bond, an oxygen atom or a sulfur atom, $R^{13}$ is an alkyl group having 1 or more and 4 or less carbon atoms, an alkoxy group having 1 or more and 4 or less carbon atoms, a phenoxy group, or a phenyl group, s is an integer of 0 or more and 5 or less, and t is 0, 1, or 2.

**2.** The curable ink composition according to claim 1, wherein a ration of a mass of the solvent (S) is 5% by mass or less relative to a mass of the curable ink composition.

**3.** The curable ink composition according to claim 1 or 2, wherein a ratio of a mass of the metal oxide nanocrystals (B) is 5% by mass or more and 70% by mass or less relative to a mass of the curable ink composition excluding a mass of the solvent (S).

**4.** The curable ink composition according to any one of claims 1 to 3, wherein the zirconium oxide nanocrystals are nanocrystals at least partially capped zirconium oxide nanocrystals.

**5.** The curable ink composition according to any one of claims 1 to 4, further comprising a surfactant.

**6.** The curable ink composition according to any one of claims 1 to 5, further comprising an organic dopant.

**7.** The curable ink composition according to any one of claims 1 to 6, further comprising a photopolymerization initiator (C1) or a thermalpolymerization initiator (C2).

**8.** A cured product of the curable ink composition according to any one of claims 1 to 7.

**9.** The cured product according to claim 8, wherein a refractive index at a wavelength of 550 nm is 1.52 or higher and 1.76 or lower.

**10.** A nanocomposite comprising a substrate and a film composed of the cured product according to claim 8 or 9 on the substrate.

**11.** The nanocomposite according to claim 10, wherein the transmittance is 40% or more and 99% or less at a thickness of 10 $\mu$m or less.

FIG. 1

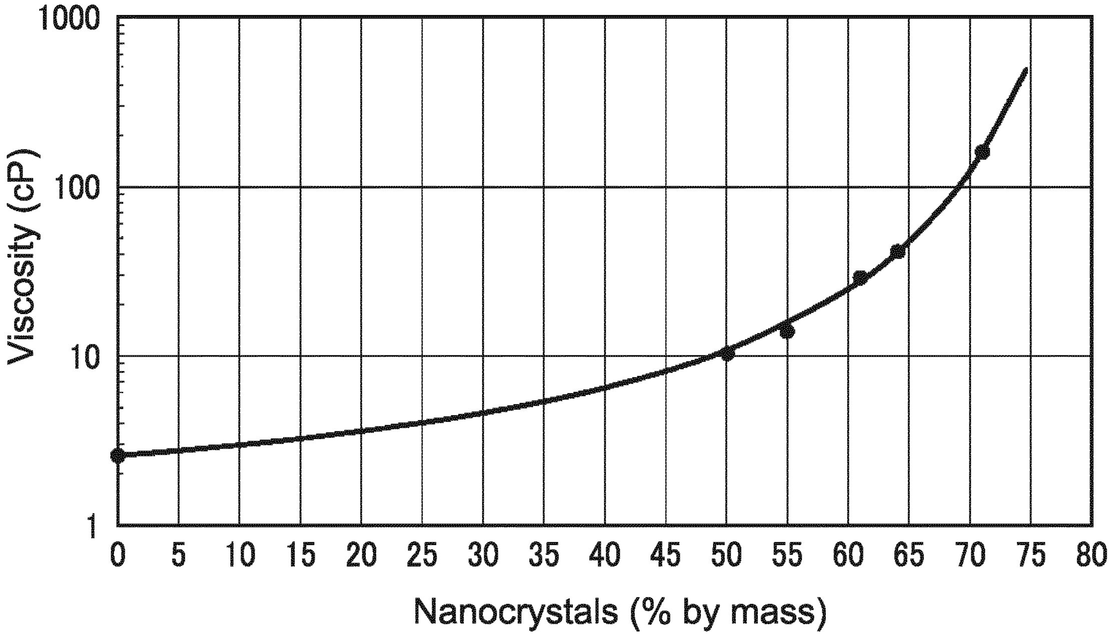
1000
100
10
1
Viscosity (cP)
0 5 10 15 20 25 30 35 40 45 50 55 60 65 70 75 80
Nanocrystals (% by mass)

FIG. 2

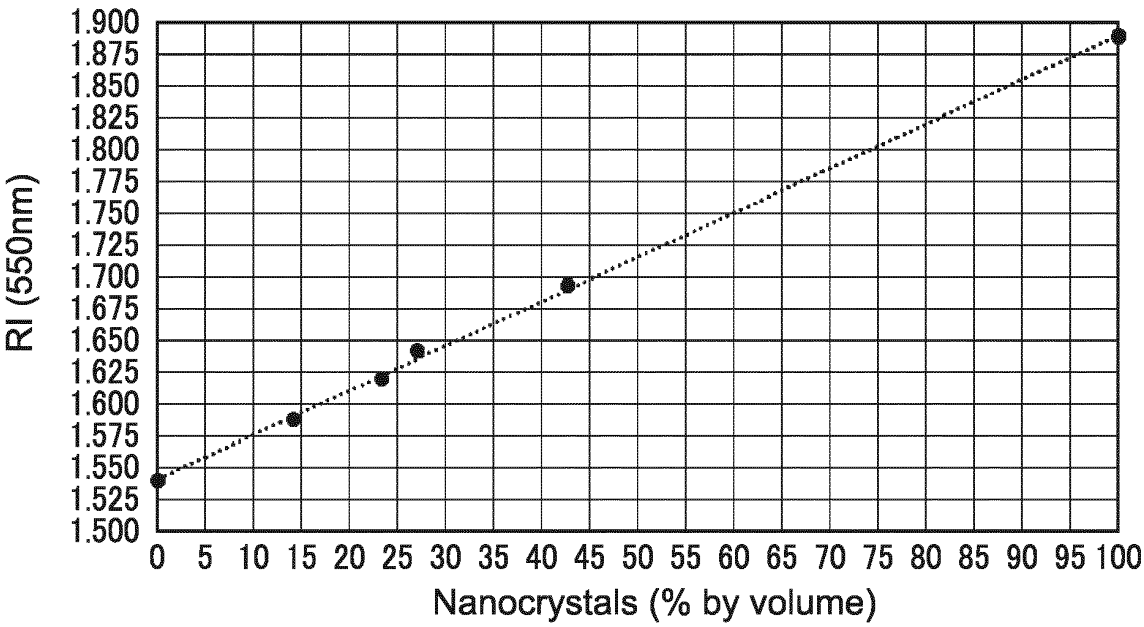
1.900
1.875
1.850
1.825
1.800
1.775
1.750
1.725
1.700
1.675
1.650
1.625
1.600
1.575
1.550
1.525
1.500
RI (550nm)
0 5 10 15 20 25 30 35 40 45 50 55 60 65 70 75 80 85 90 95 100
Nanocrystals (% by volume)

FIG. 3

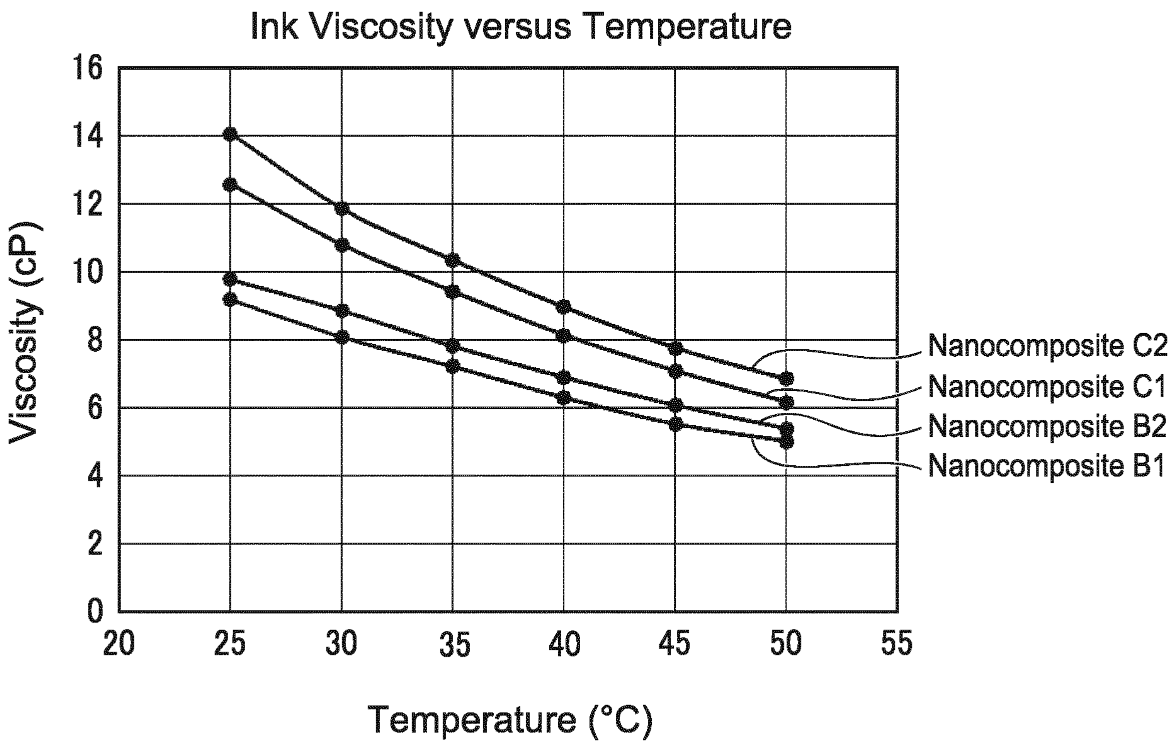

Ink Viscosity versus Temperature
Viscosity (cP)
16
14
12
10
8
6
4
2
0
20
25
30
35
40
45
50
55
Temperature (°C)
Nanocomposite C2
Nanocomposite C1
Nanocomposite B2
Nanocomposite B1

FIG. 4

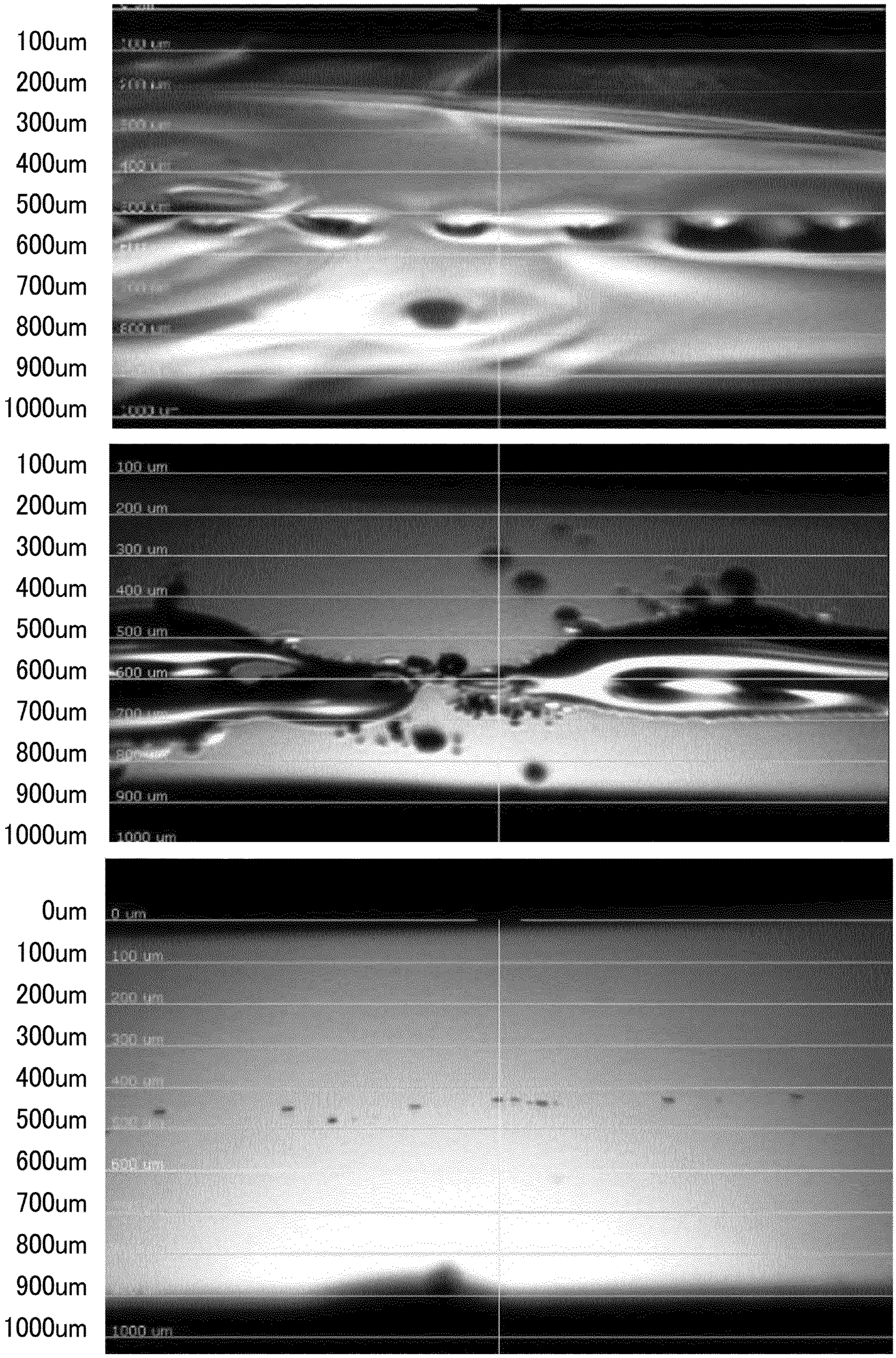
100um
200um
300um
400um
500um
600um
700um
800um
900um
1000um
100um
200um
300um
400um
500um
600um
700um
800um
900um
1000um
0um
100um
200um
300um
400um
500um
600um
700um
800um
900um
1000um

FIG. 5

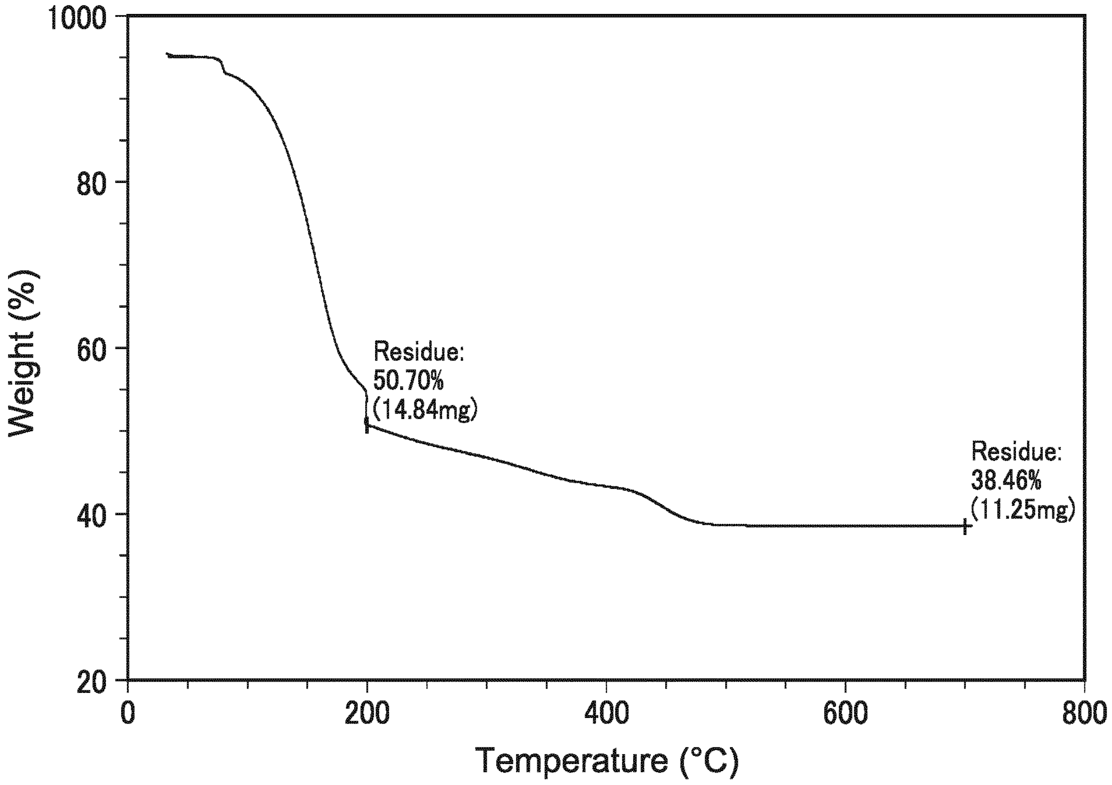
1000
80
60
40
20
0
200
400
600
800
Weight (%)
Temperature (°C)
Residue:
50.70%
(14.84mg)
Residue:
38.46%
(11.25mg)

FIG. 6

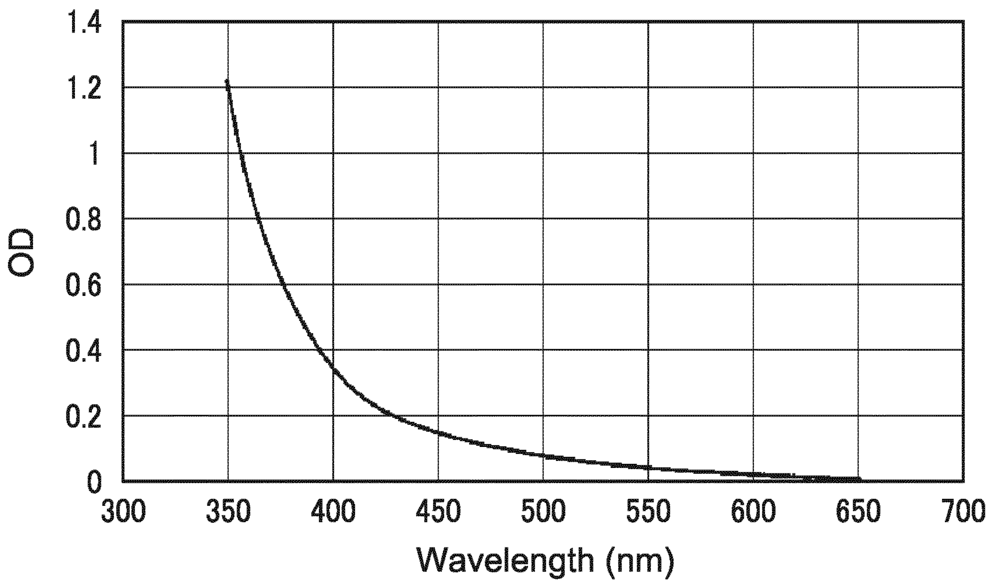
1.4
1.2
1
0.8
0.6
0.4
0.2
0
300
350
400
450
500
550
600
650
700
OD
Wavelength (nm)

FIG. 7

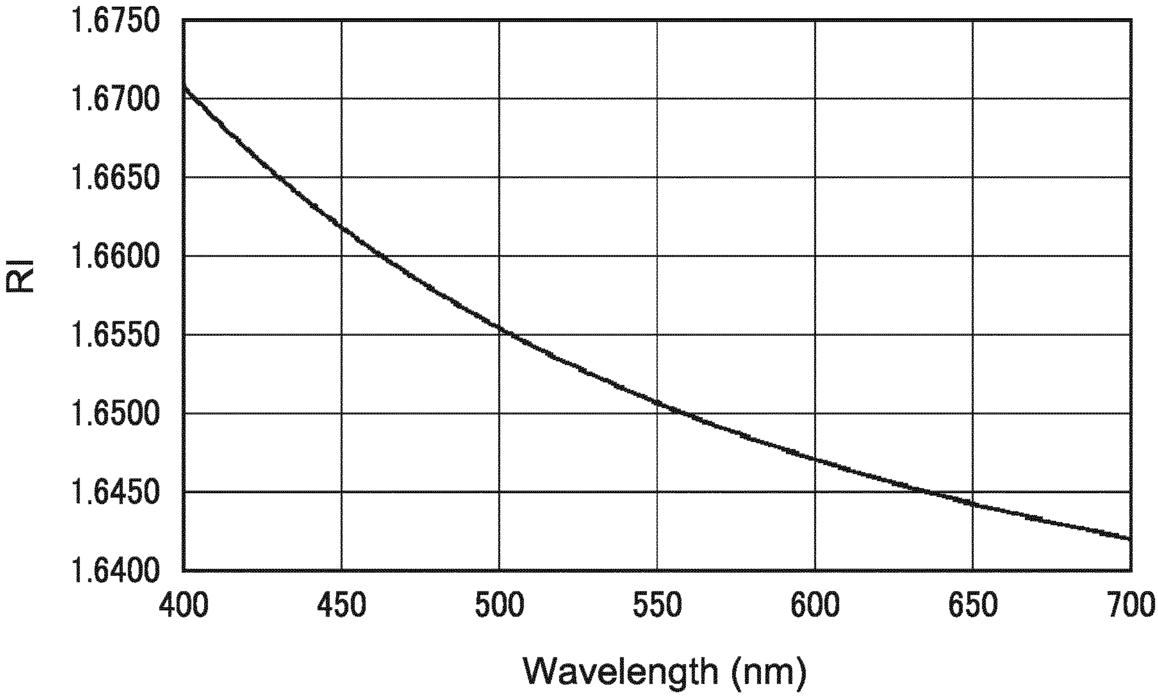
1.6750
1.6700
1.6650
1.6600
1.6550
1.6500
1.6450
1.6400
RI
400
450
500
550
600
650
700
Wavelength (nm)

FIG. 8

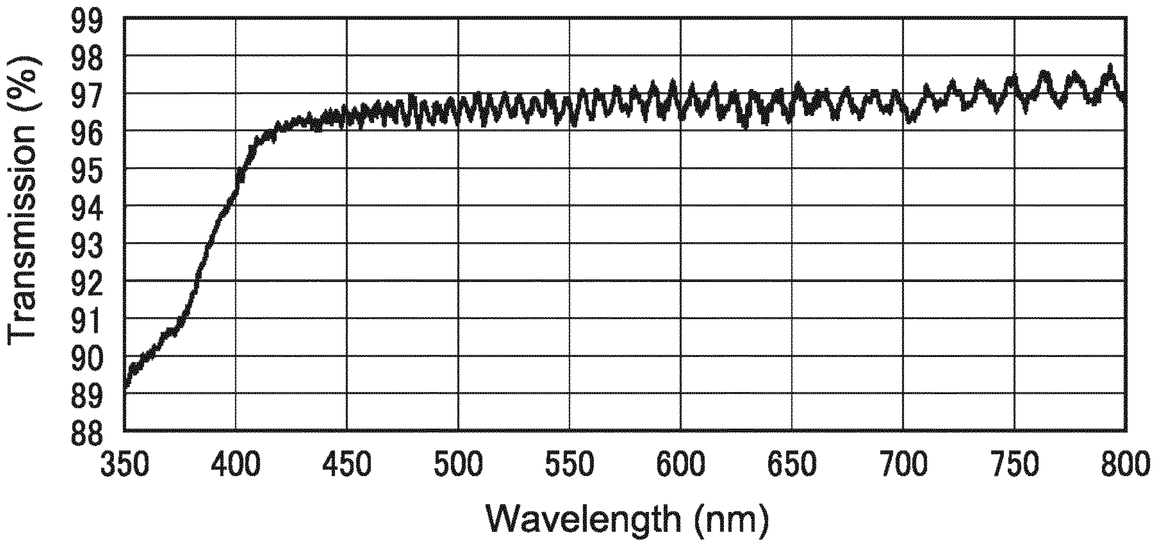
99
98
97
96
95
94
93
92
91
90
89
88
Transmission (%)
350
400
450
500
550
600
650
700
750
800
Wavelength (nm)

FIG. 9

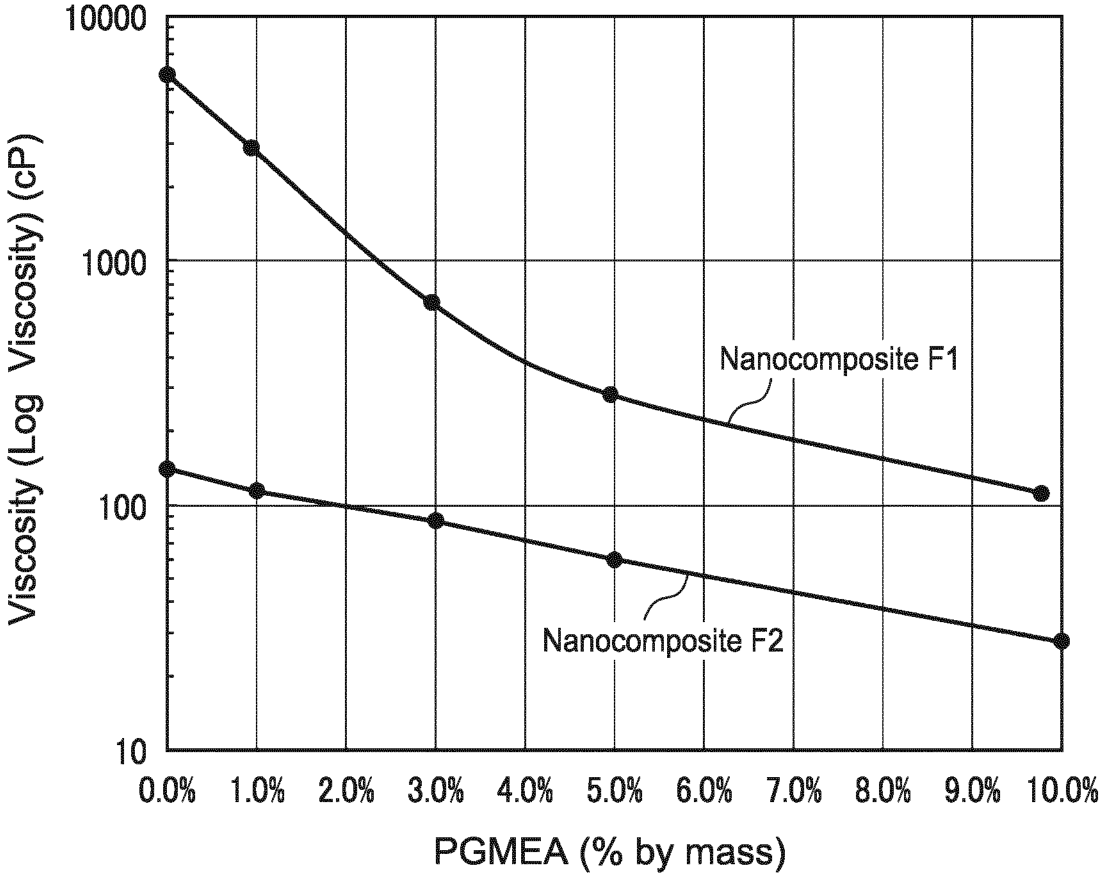
10000
1000
100
10
Viscosity (Log Viscosity) (cP)
Nanocomposite F1
Nanocomposite F2
0.0%
1.0%
2.0%
3.0%
4.0%
5.0%
6.0%
7.0%
8.0%
9.0%
10.0%
PGMEA (% by mass)

## INTERNATIONAL SEARCH REPORT

International application No. PCT/JP2020/032003

A. CLASSIFICATION OF SUBJECT MATTER
C08F 20/18(2006.01)i; C08F 20/38(2006.01)i; B41J 2/01(2006.01)i; C09D 11/38(2014.01)i
FI: C09D11/38; C08F20/38; C08F20/18; B41J2/01 129; B41J2/01 125; B41J2/01 501
According to International Patent Classification (IPC) or to both national classification and IPC

B. FIELDS SEARCHED
Minimum documentation searched (classification system followed by classification symbols)
C08F20/18; C08F20/38; B41J2/01; C09D11/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580 (JDreamIII); CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2009-120832 A (MITSUBISHI CHEMICAL CORP.) 04 June 2009 (2009-06-04) claims, paragraphs [0043]-[0044], [0070]-[70072], [0089]-[0100], examples (in particular, examples 5-6), table 1, etc. | 1-11 |
| Y | JP 2009-102550 A (MITSUBISHI CHEMICAL CORP.) 14 May 2009 (2009-05-14) claims, paragraphs [0008], [0051]-[0054], [0064]-[0092], examples (in particular, example 4), table 1, etc. | 1-11 |
| A | WO 2007/125966 A1 (MITSUBISHI CHEMICAL CORP.) 08 November 2007 (2007-11-08) claims, examples, etc. | 1-11 |
| A | JP 2007-308693 A (TOKYO INSTITUTE OF TECHNOLOGY) 29 November 2007 (2007-11-29) claims, examples, etc. | 1-11 |
| A | JP 05-303003 A (NIPPON OIL & FATS CO., LTD.) 16 November 1993 (1993-11-16) claims, examples, etc. | 1-11 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 October 2020 (13.10.2020) | 27 October 2020 (27.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/032003

| Patent Documents referred in the Report | Publication Date | Patent Family | Publication Date |
|---|---|---|---|
| JP 2009-120832 A | 04 Jun. 2009 | (Family: none) | |
| JP 2009-102550 A | 14 May 2009 | (Family: none) | |
| WO 2007/125966 A1 | 08 Nov. 2007 | US 2009/0220770 A1<br>claims, examples<br>TW 200801100 A | |
| JP 2007-308693 A | 29 Nov. 2007 | (Family: none) | |
| JP 05-303003 A | 16 Nov. 1993 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62892630
- JP 2012233142 A
- GB 2517592 A
- US 8592511 B
- US 8592511 B2